# EUROPEAN PATENT APPLICATION

(11) **EP 4 718 910 A1**
(43) Date of publication of application: **01.04.2026**
(21) Application number: 25176722.4
(22) Date of filing: 15.05.2025
(51) Int. Cl.: H04W 36/00

(54) **INTER-RAT SWITCHING METHOD, COMMUNICATION DEVICE, CHIP**

(30) Priority: 27.09.2024 CN 202411367452
(71) Applicant: Beijing X-Ring Technology Co., Ltd., Beijing 100085 (CN)
(72) Inventor: XU, Mengping, Beijing, 100085 (CN)
(74) Representative: Stöckeler, Ferdinand

(57) **Abstract**

The invention provides a switching method, a communication device, a chip and a readable storage medium. The method includes: determining (201) that a terminal is switched from a first network device to a second network device, in which the first network device and the second network device are network devices of different systems; sending (202) a first message to the second network device, in which the first message carries a first address of the terminal, and the first address is assigned to the terminal by the first network device; and receiving (203) a second message sent by the second network device, in which the second message carries a second address of the terminal, and the second address is different from the first address. Under the condition that the terminal cannot be assigned with the original address by the network when inter-system switching occurs, a current connection will not be disconnected immediately and a new address can be assigned while maintaining the current connection, to realize smooth switching and avoid service interruption, and thus service continuity can be guaranteed, service interruption latency can be reduced, thereby effectively improving user experience.

## Description

### TECHNICAL FIELD

The invention relates to the field of wireless communication technology, in particular to a switching method, a communication device, a chip and a readable storage medium.

### BACKGROUND

With continuous development of wireless communication technologies, 5G New Radio (NR) becomes an important next-generation cellular mobile technology. However, the 4G network is still widely used in practical applications. During coexistence of the 4G network and the 5G network, with popularization of the 5G network, there will be more and more scenes of switching between the 5G network and the 4G network in reality. In order to ensure user experience of services, higher requirements are put forward for the terminal and the network during inter-system switching.

### SUMMARY

The invention aims at solving one of technical problems in related art at least to some extent.

Therefore, the following technical solutions are proposed.

According to a first aspect of embodiments of the invention, a switching method is proposed. The method includes: determining that a terminal is switched from a first network device to a second network device, in which the first network device and the second network device are network devices of different systems; sending a first message to the second network device, in which the first message carries a first address of the terminal, and the first address is assigned to the terminal by the first network device; and receiving a second message sent by the second network device, in which the second message carries a second address of the terminal, the second address is assigned to the terminal by the second network device, and the second address is different from the first address.

Optionally, the first message is used to request to register to the second network device, the second message indicates that registration of the terminal is accepted, and the second message is further used to activate a first bearer. The first bearer is a default bearer on a connection established between the terminal and the second network device.

Optionally, the method further includes: sending a third message to the second network device, in which the third message indicates that the registration of the terminal is completed.

Optionally, the method further includes: releasing a local second bearer, in which the second bearer is a bearer on the connection established between the terminal and the second network device, and the second bearer is obtained based on mapping of a third bearer, and the third bearer is a bearer on a connection established between the terminal and the first network device.

Optionally, the first message is a registration request message, and the second message is a registration accept message.

Optionally, the method further includes: sending a fourth message to the second network device, in which the fourth message indicates that the terminal rejects the registration.

Optionally, the method further includes: deleting a local fourth bearer, in which the fourth bearer is used for the terminal to send the first message.

Optionally, the method further includes: sending a registration request message to the second network device, in which the registration request message is of an initial type.

Optionally, the first message is used to request the second network device to establish a packet data network (PDN) connection, the second message is used to activate a first bearer, and the first bearer is a default bearer on a connection established between the terminal and the second network device.

Optionally, the method further includes: sending a third message to the second network device, in which the third message indicates that the terminal agrees to activate the first bearer.

Optionally, the method further includes: updating an Internet Protocol (IP) parameter in a related module based on the second address.

Optionally, the method further includes: sending a fourth message to the second network device, in which the fourth message indicates that the terminal refuses to activate the first bearer; and releasing a local second bearer, in which the second bearer is a bearer on a connection established between the terminal and the second network device, and the second bearer is obtained based on mapping of a third bearer, and the third bearer is a bearer on a connection established between the terminal and the first network device.

Optionally, the first message is used to request the second network device to establish a packet data unit (PDU) session, and the second message indicates that a PDU session establishment request is accepted.

Optionally, the method further includes: updating an IP parameter in a related module based on the second address.

Optionally, the method further includes: sending a fourth message to the second network device, in which the fourth message indicates that the terminal ends the PDU session; and releasing a local second bearer, in which the second bearer is a bearer on a connection established between the terminal and the second network device, the second bearer is obtained based on mapping of a third bearer, and the third bearer is a bearer on a connection established between the terminal and the first network device.

Optionally, the first network device is a network device in a 5G mobile communication system, and the second network device is a network device in a 4G mobile communication system.

Optionally, the first network device is a network device in a 4G mobile communication system, and the second network device is a network device in a 5G mobile communication system.

According to a second aspect of embodiments of the invention, a switching method is proposed. The method includes: receiving a first message sent by a terminal, in which the first message carries a first address of the terminal, and the first address is assigned to the terminal by a first network device; determining that the first address cannot be assigned to the terminal, and sending a second message to the terminal, in which the second message carries a second address of the terminal, the second address is different from the first address, and the second address is assigned to the terminal by a second network device. The terminal is switched from the first network device to the second network device, and the first network device and the second network device are network devices of different systems.

Optionally, the first message is used to request to register to the second network device, the second message indicates that registration of the terminal is accepted, and the second message is further used to activate a first bearer, in which the first bearer is a default bearer on a connection established between the terminal and the second network device.

Optionally, the method further includes: receiving a third message sent by the terminal, in which the third message indicates that the registration of the terminal is completed.

Optionally, the first message is a registration request message, and the second message is a registration accept message.

Optionally, the method further includes: receiving a fourth message sent by the terminal, in which the fourth message indicates that the terminal rejects the registration.

Optionally, the method further includes: receiving a registration request message sent by the terminal, in which the registration request message is of an initial type.

Optionally, the first message is used to request the second network device to establish a PDN connection, the second message is used to activate a first bearer, in which the first bearer is a default bearer on a connection established between the terminal and the second network device.

Optionally, the method further includes: receiving a third message sent by the terminal, in which the third message indicates that the terminal agrees to activate the first bearer.

Optionally, the second address is further used for the terminal to update an IP parameter in a related module.

Optionally, the method further includes: receiving a fourth message sent by the terminal, in which the fourth message indicates that the terminal refuses to activate the first bearer.

Optionally, the first message is used to request the second network device to establish a PDU session, and the second message indicates that a PDU session establishment request is accepted.

Optionally, the second address is further used for the terminal to update an IP parameter in a related module.

Optionally, the method further includes: receiving a fourth message sent by the terminal, in which the fourth message indicates that the terminal ends the PDU session.

Optionally, the first network device is a network device in a 5G mobile communication system, and the second network device is a network device in a 4G mobile communication system.

Optionally, the first network device is a network device in a 4G mobile communication system, and the second network device is a network device in a 5G mobile communication system.

According to a third aspect of embodiments of the invention, a terminal is proposed. The terminal includes: a processing module, configured to determine that a terminal is switched from a first network device to a second network device, in which the first network device and the second network device are network devices of different systems; a transceiver module, configured to send a first message to the second network device, in which the first message carries a first address of the terminal, and the first address is assigned to the terminal by the first network device; and to receive a second message sent by the second network device, in which the second message carries a second address of the terminal, the second address is assigned to the terminal by the second network device, and the second address is different from the first address.

According to a fourth aspect of embodiments of the invention, a second network device is proposed. The second network device includes: a transceiver module, configured to receive a first message sent by a terminal, in which the first message carries a first address of the terminal, and the first address is assigned to the terminal by a first network device; determine that the first address cannot be assigned to the terminal, and send a second message to the terminal, in which the second message carries a second address of the terminal, the second address is different from the first address, and the second address is assigned to the terminal by a second network device. The terminal is switched from the first network device to the second network device, and the first network device and the second network device are network devices of different systems.

According to a fifth aspect of embodiments of the invention, a communication device is proposed. The communication device includes: one or more processors. The communication device is used for executing the switching method proposed in the embodiments of the first aspect of the invention, or for executing the switching method proposed in the embodiments of the second aspect of the invention.

According to a sixth aspect of embodiments of the invention, a chip is proposed. The chip includes at least one processor and a communication interface. The communication interface is configured to receive input signals or output signals of the chip, and the processor communicates with the communication interface and realizes the switching method proposed in the embodiments of the first aspect of the invention or the switching method proposed in the embodiments of the second aspect of the invention by a logic circuit or executing code instructions.

According to a seventh aspect of embodiments of the invention, a non-transitory computer-readable storage medium is proposed. When instructions in the storage medium are executed by a processor of a communication device, the communication device is caused to execute the switching method proposed in the embodiments of the first aspect of the invention or the switching method proposed in the embodiments of the second aspect of the invention.

In the technical solutions of the invention, it is determined that the terminal is switched from the first network device to the second network device, and the first network device and the second network device are network devices of different systems; the first message is sent to the second network device, in which the first message carries the first address of the terminal, and the first address is assigned to the terminal by the first network device; the second message sent by the second network device is received, in which the second message carries the second address of the terminal, the second address is assigned to the terminal by the second network device, and the second address is different from the first address. Therefore, under the condition that the terminal cannot be assigned with the original address by the network device after the switching when inter-system switching occurs, a current connection will not be disconnected immediately and a new address may be assigned while maintaining the current connection, to realize smooth switching and avoid service interruption, and thus service continuity may be guaranteed, service interruption latency may be reduced, thereby effectively improving user experience. Moreover, signaling interaction may be reduced, the probability of abnormal occurrence and the complexity may be effectively reduced, thereby improving stability of the terminal and robustness of the system.

Additional aspects and advantages of embodiments of invention will be given in part in the following descriptions, become apparent in part from the following descriptions, or be learned from the practice of the invention.

### BRIEF DESCRIPTION OF THE DRAWINGS

The above and/or additional aspects and advantages of the invention will be apparent and easily understood from the following description of embodiments taken in combination with the accompanying drawings, in which:
FIG. 1A is a schematic diagram of a communication system provided by an embodiment of the invention.
FIGS. 1B-1D are interactive schematic diagrams of inter-system switching provided by embodiments of the invention.
FIG. 2 is a flowchart of a switching method provided by an embodiment of the invention.
FIG. 3A is a flowchart of a switching method provided by an embodiment of the invention.
FIG. 3B is an interactive schematic diagram of a switching method provided by an embodiment of the invention.
FIG. 4A is a flowchart of a switching method provided by an embodiment of the invention.
FIG. 4B is an interactive schematic diagram of a switching method provided by an embodiment of the invention.
FIG. 5A is a flowchart of a switching method provided by an embodiment of the invention.
FIG. 5B is an interactive schematic diagram of a switching method provided by an embodiment of the invention.
FIG. 6A is a flowchart of a switching method provided by an embodiment of the invention.
FIG. 6B is an interactive schematic diagram of a switching method provided by an embodiment of the invention.
FIG. 7A is a flowchart of a switching method provided by an embodiment of the invention.
FIG. 7B is an interactive schematic diagram of a switching method provided by an embodiment of the invention.
FIG. 8A is a flowchart of a switching method provided by an embodiment of the invention.
FIG. 8B is an interactive schematic diagram of a switching method provided by an embodiment of the invention.
FIGS. 9-15 are flowcharts of a switching method provided by embodiments of the invention.
FIG. 16 is a block diagram of a terminal provided by an embodiment of the invention.
FIG. 17 is a block diagram of a second network device provided by an embodiment of the invention.
FIG. 18 is a block diagram of a communication device provided by an embodiment of the invention.
FIG. 19 is a block diagram of a chip system provided by an embodiment of the invention.

### DETAILED DESCRIPTION

The embodiments of the invention will be described in detail, examples of which are illustrated in the accompanying drawings, in which the same or similar reference numerals indicate the same or similar elements or elements having the same or similar functions throughout. The embodiments described below with reference to the drawings are exemplary and are intended to explain the invention, but not to be construed as limiting the invention.

The embodiments of the invention provide a switching method, a communication device, a chip and a readable storage medium. In some embodiments, the terms "switching method", "information processing method", "communication method", etc. may be interchanged. The terms "switching apparatus", "information processing apparatus" and "communication apparatus" may be interchanged, and the terms "switching system", "information processing system" and "communication system" may be interchanged.

The embodiments of the invention are not exhaustive, but only schematic illustrations of some embodiments, and are not taken as specific limitations on the protection scope of the invention. Without contradiction, each step in an embodiment may be implemented as an independent embodiment, and the steps may be combined arbitrarily. For example, the scheme after removing some steps in an embodiment may also be implemented as an independent embodiment, and the sequence of steps in an embodiment may be exchanged arbitrarily. In addition, optional implementations in an embodiment may be combined arbitrarily, and the embodiments may also be combined arbitrarily. For example, some or all steps of different embodiments may be combined arbitrarily, and one embodiment may be combined arbitrarily with optional implementations of other embodiments.

In the embodiments of the invention, if there is no special explanation and logical conflict, the terms and/or descriptions in the embodiments are consistent and may be quoted mutually, and the technical features in different embodiments may be combined to form a new embodiment according to their inherent logical relationship.

The term used in the embodiments of the invention is only for the purpose of describing a specific embodiment, and is not used as a limitation of the invention.

In the embodiments of the invention, unless otherwise specified, the element that is expressed in a singular form, such as "a", "an", "the", "that", "the above", "the foregoing" or "this", may also cover the meaning of "one and only one", "one or more", or "at least one". For example, when an article such as "a", "an", "the", etc. is used in the translation, the noun after the article may be understood as in a singular form or a plural form.

In the embodiments of the invention, "a plurality of" refers to two or more.

In some embodiments, the terms "at least one of", "one or more", "a plurality of" and "multiple" may be used interchangeably.

In some embodiments, according to situations, expressions such as "at least one of A or B", "A and/or B", "in one case, it refers to A; in another case, it refers to B", "in response to one case, it refers to A; in response to another case, it refers to B", etc. may cover the following technical solutions, for example, "in some embodiments, A is executed (A is executed independently of B)", "in some embodiments, B is executed (B is executed independently of A)", "in some embodiments, A and B are selectively executed", and "in some embodiments, both A and B are executed". The above explanations are also applicable when there are more branches such as A, B and C.

In some embodiments, the expression "A or B" may cover the following technical solutions according to situations, for example, "in some embodiments, A is executed (A is executed independently of B)", "in some embodiments, B is executed (B is executed independently of A)", "in some embodiments, A and B are selectively executed". The above explanations are also applicable when there are more branches such as A, B and C.

The prefixes such as "first" and "second" in the embodiments of the invention are only used to distinguish different objects described herein, and do not limit a position, order, priority, quantity or content of the described objects. The description of object may be referred to the description of the context in the claim or the embodiment, and the use of prefixes should not constitute unnecessary limitations. For example, if the described object is a "field", the ordinal numbers before the "field" in the "first field" and the "second field" do not limit the position or order of fields, or limit whether the fields are in the same message or not, or limit the order of precedence of the "first field" and the "second field". For another example, if the described object is a "level", the ordinal numbers before the "level" in the "first level" and the "second level" do not limit the priority of levels. For another example, the number of described objects is not limited by ordinal numbers, and it may indicate one or more. Take "first device" as an example, there may be one or more "first devices". In addition, the objects with different prefixes may be the same or different. For example, if the described object is "device", the "first device" and the "second device" may be the same device or different devices, and their types may be the same or different. For another example, if the described object is "information", the "first information" and the "second information" may be the same information or different information, and their contents may be the same or different.

In some embodiments, "including A", "containing A", "indicating A" and "carrying A" may be interpreted as directly carrying A or indirectly indicating A.

In some embodiments, the terms "in response to", "in response to determining", "in the case that", "when", "while", "if" and "assuming" may be used interchangeably.

In some embodiments, the terms "greater than", "greater than or equal to", "not smaller than", "more than", "more than or equal to", "not less than", "higher than", "higher than or equal to", "not lower than", and "above" are interchangeable. The terms "less than", "less than or equal to", "not greater than", "smaller than", "smaller than or equal to", "not greater than", "lower than", "lower than or equal to", "not higher than", and "below" may be used interchangeably.

In some embodiments, device and apparatus are interpreted as physical or virtual, and their names are not limited to those recorded in the embodiments. In some cases, they may also be understood as "equipment", "device", "circuit", "network element", "node", "function", "unit", "section", "system", "network", "chip", "chip system", "entity" or "body".

In some embodiments, the term "network" is interpreted as referring to devices included in the network, such as access network device, core network device, and the like.

In some embodiments, the access network (AN) device may also be referred to as radio access network (RAN) device, base station (BS), radio BS, and fixed station. In some embodiments, it is understood as a node, an access point, a transmission point (TP), a reception point (RP), a transmission/reception point (TRP), a panel, an antenna panel, an antenna array, a cell, a macro cell, a small cell, a femto cell, a pico cell, a sector, a cell group, a serving cell, a carrier, a component carrier, a bandwidth part (BWP), etc.

In some embodiments, a "terminal" or a "terminal device" may also be called a "user equipment (UE)", a "user terminal", a "Narrow Band-Internet of Things (NB-IoT) device", a "mobile station (MS)", a "mobile terminal (MT)", a "subscriber station", a "mobile unit", a "subscriber unit", a "wireless unit", a "remote unit", a "mobile device", a "wireless device", a "wireless communication device", a "remote device", a "mobile subscriber station", an "access terminal", a "mobile terminal", a "wireless terminal", a "remote terminal", a "handset", a "user agent", a "mobile client", or a "client".

In some embodiments, the term "AN device", "core network device", or "network device" may be replaced by "terminal". For example, in addition to communication between the AN device, the core network device or the network device and the terminal, the embodiments of the invention may also be applied to communications among a plurality of terminals (for example, device-to-device (D2D) communication, vehicle-to-everything (V2X) communication, etc.). In such case, the terminal may have all or part of the functions of the AN device. In addition, terms such as "uplink (UL)" and "downlink (DL)" may be replaced by a term corresponding to communication between terminals (for example, "side"). For example, a UL channel and a DL channel may be replaced by a side channel, UL and DL may be replaced by a side link.

In some embodiments, the terminal may be replaced by the AN device, the core network device, or the network device. In such case, the AN device, the core network device, or the network device may have all or part of the functions of the terminal.

In some embodiments, data/information acquisition complies with the laws and regulations of the country of location.

In some embodiments, data/information is obtained with user consent.

In addition, each element, row or column in the table of the embodiments of the invention may be implemented as an independent embodiment, and any combination of the element, the row and the column may also be implemented as an independent embodiment.

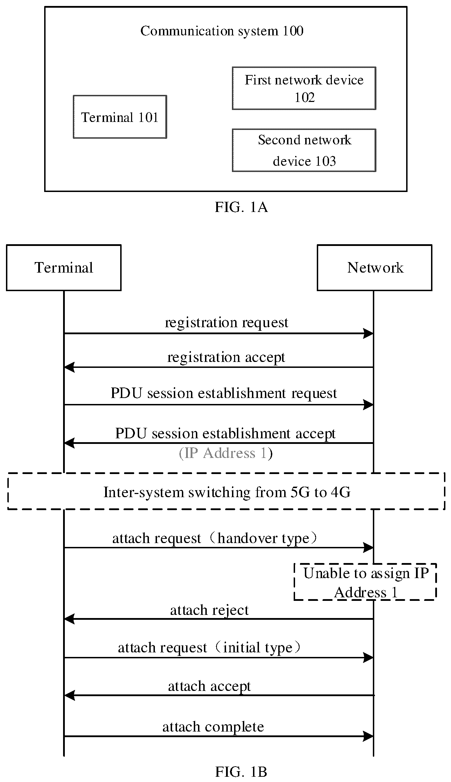

FIG. 1A is a schematic diagram of a communication system 100 according to an embodiment of the invention.

As illustrated in FIG. 1A, the communication system 100 includes a terminal 101, a first network device 102 and a second network device 103.

In some embodiments, the terminal 101 includes, but is not limited to, at least one of a mobile phone, a wearable device, an IoT device, a NB-IoT device, a satellite communication device, a car having a communication function, a smart car, a Pad, a computer having a wireless transceiver function, a virtual reality (VR) terminal, an augmented reality (AR) terminal, a wireless terminal in industrial control, a wireless terminal in self-driving, a wireless terminal in remote medical surgery, and a wireless terminal in smart grid, a wireless terminal in transportation safety, a wireless terminal in smart city, a wireless terminal in smart home, and a reduced capacity (RedCap) terminal.

In some embodiments, the first network device 102 and the second network device 103 are, for example, nodes or devices that access the terminal to a wireless network. The network device may include, but is not limited to, a node such as satellite or drone in a resource determination network, an evolved NodeB (eNB) in a 5G communication system, a next generation eNB, ng-eNB), a next generation NodeB (gNB), a next generation RAN node (NG-RAN node), a NodeB (NB), a home NodeB (HNB), a home evolved NodeB (HeNB), a wireless backhaul equipment, a radio network controller (RNC), a BS controller (BSC), a base transceiver station (BTS), a base band unit (BBU), a mobile switching center, a BS in a 6G communication system, an Open RAN, a Cloud RAN, a BS in other communication systems, and an access node in a Wireless Fidelity (Wi-Fi) system. The core network may include, for example, at least one of an Evolved Packet Core (EPC), a 5G Core Network (5GCN) or a Next Generation Core (NGC).

In some embodiments, the technical solution of the invention can be applied to the Open RAN. In this case, the interfaces between AN devices or within the AN devices involved in the embodiments of the invention may become internal interfaces of the Open RAN, and the procedure and information may be exchanged among these internal interfaces by software or program.

In some embodiments, the AN device is composed of a central unit (CU) and a distributed unit (DU). The CU may also be called a control unit. The structure of CU-DU may split the protocol layer of the AN device, and some functions of the protocol layer are controlled centrally by the CU, while a part of or all of the remaining functions of the protocol layer are distributed in the DU, which is centrally controlled by the CU, which is not limited herein.

It is understood that the communication system is introduced first in the embodiments of the invention to more clearly explain the technical solution of the embodiments of the invention, and does not constitute a limitation on the technical solution proposed in the embodiments of the invention. Those skilled in the art understand that as system architectures evolve and new business scenarios emerge, the technical solution proposed in the embodiments of the invention is also applicable to similar technical problems.

The following embodiments of the invention are applied to the communication system 100 shown in FIG. 1A or a part of its main bodies, which is not limited thereto. The main bodies shown in FIG. 1A are examples, and the communication system may include all or part of the main bodies in FIG. 1A, or other main bodies not included in FIG. 1A. The number and form of main bodies are arbitrary, and the main bodies may be physical or virtual. The connection relationships between the main bodies are examples, and the main bodies may or may not be connected. They may be connected in any mode, directly or indirectly, in a wired manner or wirelessly.

The embodiments of the invention can be applied to a Non-terrestrial Network (NTN), Long Term Evolution (LTE), LTE-Advanced (LTE-A), LTE-Beyond (LTE-B), SUPER 3G, IMT-Advanced, a 4th generation (4G) mobile communication system, a 5th generation (5G) mobile communication system, 5G new radio (NR), Future Radio Access (FRA), New-Radio Access Technology (RAT), NR, New radio access (NX), Future generation radio access (FX), Global System for Mobile Communications (GSM (registered trademark)), CDMA2000, an Ultra Mobile Broadband (UMB), IEEE 802.11(Wi-Fi (registered trademark)), IEEE 802.16 (WiMAX (registered trademark)), IEEE 802.20, an Ultra-WideBand (UWB), a Bluetooth (registered trademark), a Public Land Mobile Network (PLMN), a D2D system, a Machine to Machine (M2M) system, an IoT system, an NB-IoT system, a V2X system, systems using other communication methods and their next generation systems. In addition, a combination of systems (for example, a combination of LTE or LTE -A and 5G) is used for application.

In some embodiments, the first network device 102 and the second network device 103 are network devices in different communication systems. For example, the first network device 102 is a network device in a 5G system, and the second network device 103 is a network device in a 4G system. Alternatively, the first network device 102 is a network device in the 4G system, and the second network device 103 is a network device in the 5G system.

In some embodiments, the terminal 101 may perform inter-system switching between the first network device 102 and the second network device 103.

In some embodiments, the first network device 102 and the second network device 103 do not support an N26 interface.

In some embodiments, as shown in FIG. 1B, the terminal 101 completes initial registration (for example, through the first network device 102) in a 5G network [the terminal sends a registration request, and the network sends a registration accept]. A PDU session is established for user services, and an IP Address 1 is assigned [the terminal sends a PDU session establishment request, and the network sends a PDU session establishment accept, which carries the IP Address 1]. In some cases, the terminal 101 may be switched or reselected from the 5G to the 4G (for example, the second network device 103), and after the 4G network completes its camp, an attach procedure may be initiated, and a registration type is handover. Further, the 4G network may respond to an attach request of the terminal 101. In some cases, if the previous IP Address 1 cannot be assigned currently, the 4G network will reject the attach request, the terminal 101 needs to re-initiate the initial registration procedure.

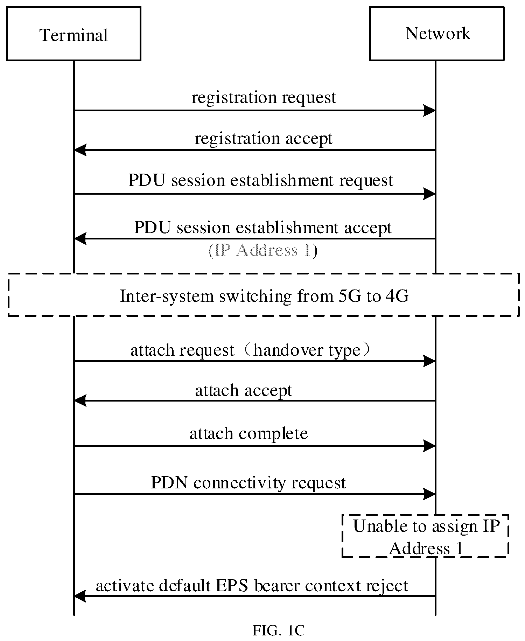

In some embodiments, as illustrated in FIG. 1C, the terminal 101 completes initial registration in the 5G network (for example, through the first network device 102) [the terminal sends a registration request, and the network sends a registration accept]. A PDU session is established for user services and an IP Address 1 is assigned [the terminal sends a PDU session establishment request, and the network sends a PDU session establishment accept, which carries an IP Address 1]. In some cases, the terminal 101 may be switched or reselected from the 5G to the 4G (for example, the second network device 103), and after the 4G network completes its camp, an attach procedure may be initiated. After the attach procedure is completed, the terminal 101 initiates a re-establishment of a previous bearer (by requesting to establish a PDN connection), and the parameter used is a context parameter of a PDU session established under the 5G network. In some cases, if the previous IP Address 1 cannot be assigned currently, the 4G network will reject a PDN connection establishment request from the terminal, and the terminal 101 will release the previous bearer and subsequently reactivate it according to service requirements.

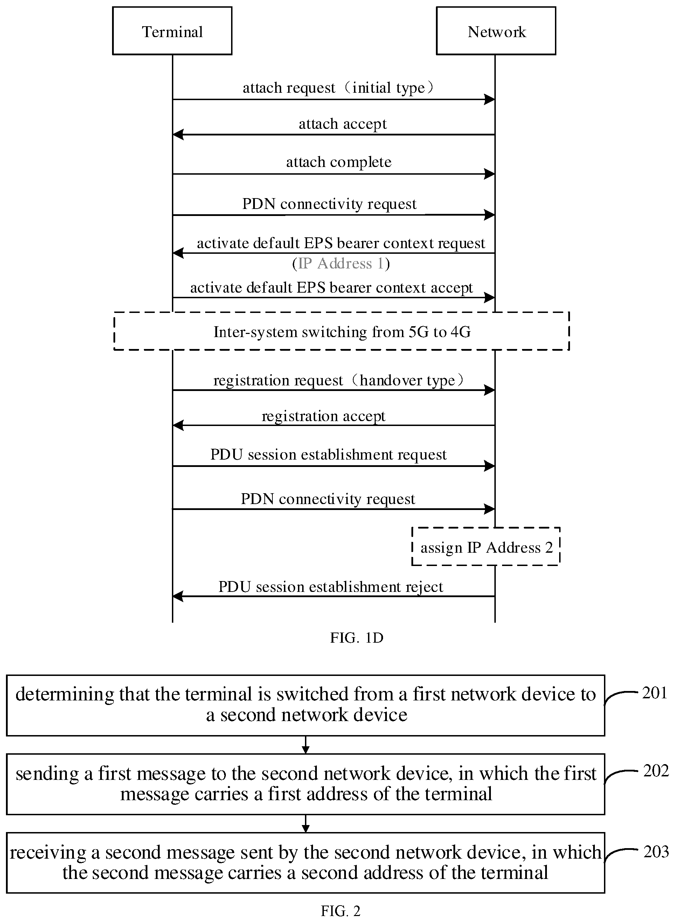

In some embodiments, as illustrated in FIG. 1D, the terminal 101 completes initial registration in the 4G network (for example, through the first network device 102) [the terminal sends an attach request of initial type, the network sends an attach accept, and then the terminal sends an attach complete], a PDN connection is established for user services, and an IP Address 1 is assigned [the terminal sends a PDN connectivity request, the network sends an activation default Evolved Packet System (EPS) bearer context request, and the terminal sends an activate default EPS bearer context accept]. In some cases, the terminal 101 may be switched or reselected from the 4G to the 5G (for example, the second network device 103), and after the 5G network completes its camp, a 5G registration procedure is initiated. After the completion of the 5G registration procedure, the terminal 101 initiates a reestablishment of a previous bearer (by requesting to establish a PDU session), and the parameter used is a bearer context parameter corresponding to the PDN connection established under the 4G network. In some cases, if the previous IP Address 1 cannot be assigned currently, the 5G network will reject a PDU session establishment request of the terminal, and the terminal 101 will release the previous bearer and subsequently reactivate it according to service requirements.

It can be seen that if the previous IP address cannot be assigned by the network after the inter-system switching, the network will reject the registration of the terminal or the reestablishment of the bearer, resulting in service interruption and poor user experience.

A switching method, a communication device, a chip and a readable storage medium of the embodiments of the invention will be described in detail with reference to the accompanying drawings.

FIG. 2 is a flowchart of a switching method provided by an embodiment of the invention. It should be noted that this method is applied to a terminal.

As illustrated in FIG. 2, the switching method may include the following steps.

At step 201, it is determined that the terminal is switched from a first network device to a second network device.

In some embodiments, the first network device and the second network device are network devices of different systems.

For example, the first network device is a network device in a 4G system, and the second network device is a network device in a 5G system. Or, the first network device is a network device in a 5G system, and the second network device is a network device in a 4G system.

In some embodiments, the first network device does not support an N26 interface.

In some embodiments, the second network device may or may not support an N26 interface.

In some embodiments, the terminal may determine that an inter-system switching from the first network device to the second network device occurs.

In some embodiments, before the switching occurs, the terminal completes initial registration with the first network device, and the first network device establishes a PDN connection or a PDU session for user services and assigns a corresponding first address.

In the embodiments of the invention, the cause for the switching is not limited, and it can be caused by any reason, for example, it may be caused by the terminal or the network, which is not limited in the invention.

At step 202, a first message is sent to the second network device, in which the first message carries a first address of the terminal.

The first address is an address assigned to the terminal by the first network device.

Optionally, the first address is a corresponding IP address parameter assigned by the first network device when establishing connection and bearer for user services of the terminal.

Optionally, a type of the first address may be an IPv4 single stack, an IPv6 single stack, or an IPv4v6 dual stack.

In some embodiments, the first message is used to request to register to the second network device.

In some embodiments, the first message is used to request the second network device to establish a PDN connection.

In some embodiments, the first message is used to request the second network device to establish a PDU session.

In some embodiments, the first message may also include other parameters, such as an Access Point Name (APN), a Data Network Name (DNN), etc.

In some embodiments, the parameters in the first message are obtained based on context parameters of a PDN connection or PDU session previously established between the terminal and the first network device.

At step 203, a second message sent by the second network device is received, in which the second message carries a second address of the terminal.

Optionally, the second address is different from the first address.

In some embodiments, when the terminal switches to the second network device, the second network device may not be able to assign the previous first address to the terminal, so the changed second address is indicated to the terminal in the second message.

Optionally, the second address is a corresponding IP address parameter assigned to the terminal by the second network device.

Optionally, a type of the second address may be an IPv4 single stack, an IPv6 single stack, or an IPv4v6 dual stack.

In some embodiments, the second message is used to indicate that the registration of the terminal is accepted, and the second message is also used to activate a first bearer.

In some embodiments, the second message is used to activate the first bearer.

In some embodiments, the second message is used to indicate that a PDU session establishment request is accepted.

In embodiments of the invention, it is determined that the terminal is switched from the first network device to the second network device, and the first network device and the second network device are network devices of different systems; the first message is sent to the second network device, in which the first message carries the first address of the terminal, and the first address is assigned to the terminal by the first network device; the second message sent by the second network device is received, in which the second message carries the second address of the terminal, and the second address is different from the first address. Therefore, under the condition that the terminal cannot be assigned with the original address by the second network device when inter-system switching occurs, a current connection will not be disconnected immediately and a new address may be assigned while maintaining the current connection, to realize smooth switching and avoid service interruption, and thus service continuity may be guaranteed, service interruption latency may be reduced, thereby effectively improving the user experience. Moreover, signaling interaction may be reduced, the probability of abnormal occurrence and the complexity may be effectively reduced, thereby improving the stability of the terminal and the robustness of the system.

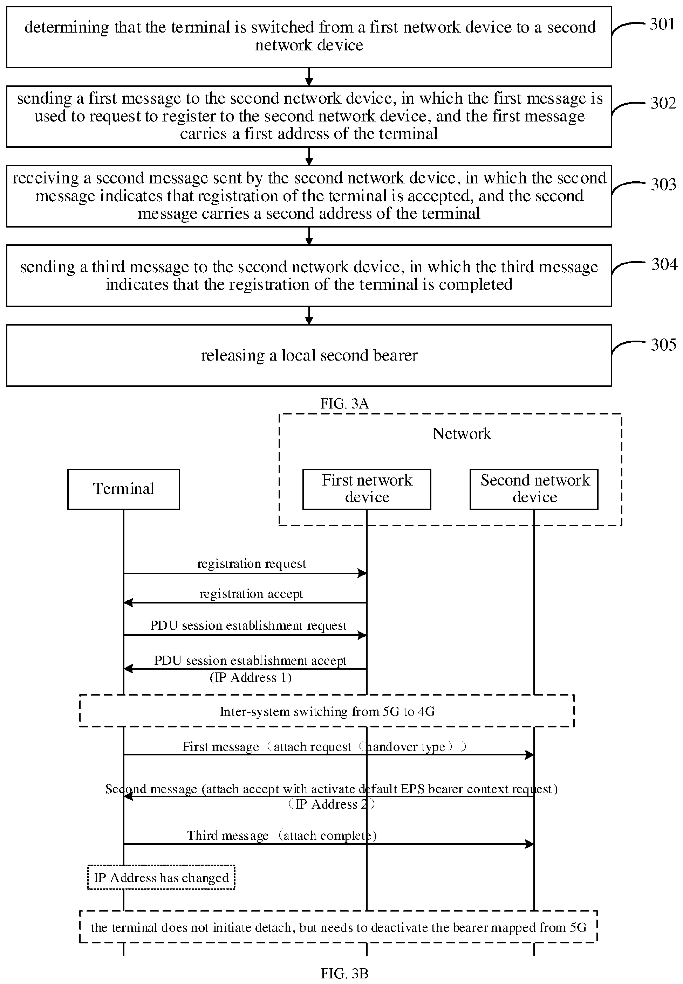

FIG. 3A is a flowchart of a switching method provided by an embodiment of the invention. It should be noted that the above method is applied to a terminal.

As illustrated in FIG. 3A, the switching method may include the following steps.

At step 301, it is determined that the terminal is switched from a first network device to a second network device.

In some embodiments, the first network device and the second network device are network devices of different systems.

In this embodiment, the first network device is a network device in a 5G system, and the second network device is a network device in a 4G system.

In some embodiments, the first network device does not support an N26 interface.

In some embodiments, the second network device may or may not support an N26 interface.

In some embodiments, the terminal may determine that an inter-system switching from the first network device to the second network device occurs.

In some embodiments, before the switching occurs, initial registration of the terminal to the first network device is completed, and the first network device establishes a PDU session for user services and assigns a corresponding first address.

In the embodiments of the invention, the cause for the switching is not limited, and it can be caused by any reason, for example, it may be caused by the terminal or the network, which is not limited in the invention.

At step 302, a first message is sent to the second network device, in which the first message is used to request to register to the second network device, and the first message carries a first address of the terminal.

In some embodiments, a type of registration requested by the first message is handover.

In some embodiments, the first address is an address assigned to the terminal by the first network device.

Optionally, the first address is a corresponding IP address parameter assigned by the first network device when establishing connection and bearer for user services of the terminal.

Optionally, a type of the first address may be an IPv4 single stack, an IPv6 single stack, or an IPv4v6 dual stack.

In some embodiments, the first message may also include other parameters, such as a type of the requested address, an APN, etc.

In some embodiments, the parameter in the first message is obtained based on mapping of a context parameter of a PDU session established between the terminal and the first network device. For example, the above APN may be obtained based on mapping of a context parameter of the PDU session, such as DNN.

In some embodiments, the first message is a registration request (also called as attach request).

At step 303, a second message sent by the second network device is received, in which the second message is used to indicate that the registration of the terminal is accepted, and the second message carries a second address of the terminal.

In some embodiments, the second network device sends the second message to the terminal, in which the second message is used to respond to the first message and indicates that the registration request of the terminal is accepted, and the second message carries the second address assigned to the terminal.

Optionally, the second address is different from the first address.

In some embodiments, when the terminal switches to the second network device, the second network device may not be able to assign the previous first address to the terminal, so the changed second address may be indicated to the terminal in the second message.

Optionally, the second address is a corresponding IP address parameter assigned to the terminal by the second network device.

Optionally, a type of the second address may be an IPv4 single stack, an IPv6 single stack, or an IPv4v6 dual stack.

In some embodiments, the second message is also used to activate a first bearer.

The first bearer is a default bearer corresponding to a connection established between the terminal and the second network device.

In some embodiments, the second message may carry an activate default EPS bearer context request to activate the first bearer.

In some embodiments, the activate default EPS bearer context request includes the second address.

In some embodiments, the second message also includes other parameters required by the first bearer.

In some embodiments, the second message is a registration accept (also called as attach accept).

At step 304, a third message is sent to the second network device, in which the third message is used for indicating that the registration of the terminal is completed.

In some embodiments, the terminal sends the third message to the second network device, and the third message is used to indicate that the registration of the terminal is completed.

In some embodiments, the third message is a registration complete (also called as attach complete).

At step 305, a local second bearer is released.

The second bearer is a bearer on a connection established between the terminal and the second network device, which is obtained based on mapping of a third bearer. The third bearer is a bearer corresponding to a PDU session established between the terminal and the first network device.

The terminal may re-initiate establishment of a new PDN connection according to service requirements.

As an example, the interaction between the terminal and the first network device/the second network device in the embodiments of the invention may be as shown in FIG. 3B.

Firstly, the terminal completes initial registration in the 5G network (the first network device) [in FIG. 3B, the terminal sends a registration request, and the first network device sends a registration accept], and the first network device does not support operation on an N26 interface, and the first network device establishes a PDU session for user services. The network assigns a corresponding IP address parameter (IP Address 1), and a type of the IP address may be an IPv4 single stack, an IPv6 single stack or an IPv4v6 double stack, and a DNN is assigned [in FIG. 3B, the terminal sends a PDU session establishment request, and the first network device sends a PDU session establishment accept carrying an IP Address 1].

Due to the cause of the network or the terminal, the inter-system switching from the 5G to the 4G is triggered. Because the operation on the N26 interface is not supported, the PDU session of the 5G cannot be directly mapped to a PDN bearer in the 4G, but a new PDN connection is initiated in the 4G according to a context parameter of a PDN session in the 5G. An access stratum will notify a non-access stratum (NAS) to register after completing the inter-system switching and camping in the cell.

Further, after the registration (also called as attach) is triggered, the NAS will take the parameter mapped from the 5G PDU session as an attach parameter, such as a type of the requested IP address, an APN, etc., and send it to the second network device in a handover type [in FIG. 3B, the terminal sends a first message (attach request of handover type)]. The second network device responds to that attach request with an attach accept carrying an activate default EPS bearer context request to activate a default bearer. The network assigns the IP address and other parameters required by the bearer [in FIG. 3B, the second network device sends a second message (attach accept), which carries an activate default EPS bearer context request containing a newly assigned IP Address 2]. The terminal may send a message in response to the attach accept, to complete the attach of handover type [the terminal sends a third message (attach complete) in FIG. 3B].

Under normal circumstances, the IP address assigned to the default bearer of a 4G attach should be consistent with the IP address of the previous 5G PDU session, so as to realize inter-system seamless bearer switching . However, in some abnormal cases, the IP address assigned by the network for the 4G attach is inconsistent with the previous one, the network does not need to reject the attach request of the terminal, but continues to respond to the terminal with the changed IP address. In this case, in order to ensure that the terminal is always online and improve user experience, the terminal will not deactivate the bearer and cause detach, but keep in the registered state.

Because there used to be a service PDU session in the 5G, there should be a PDN bearer (which is mapped from the 5G PDU session) in the 4G under normal circumstances. However, due to the change of IP address, the NAS releases the local bearer and notifies the higher layer, so that the higher layer can re-initiate a new PDN connection according to the service requirements.

According to the switching method in embodiments of the invention, it is determined that the terminal is switched from the first network device to the second network device; the first message is sent to the second network device, in which the first message is used for requesting to register to the second network device, and the first message carries the first address of the terminal; the second message sent by the second network device is received, in which the second message is used for indicating that the registration of the terminal is accepted, and the second message carries the second address of the terminal; the third message is sent to the second network device, in which the third message is used for indicating that the registration of the terminal is completed; and the local second bearer is released. Therefore, when inter-system switching occurs, the terminal may realize smooth switching without service interruption, so that service continuity may be guaranteed and service interruption latency may be reduced, thereby effectively improving the user experience. Moreover, signaling interaction may be reduced, the probability of abnormal occurrence and the complexity may be effectively reduced, thereby improving the stability of the terminal and the robustness of the system.

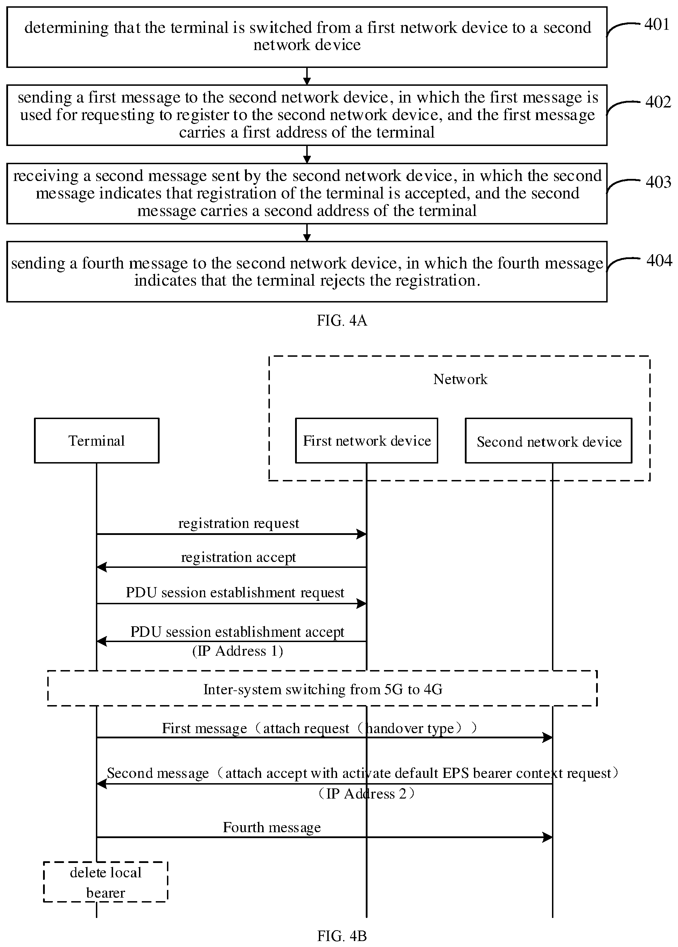

FIG. 4A is a flowchart of a switching method provided by an embodiment of the invention. It should be noted that the above method is applied to a terminal.

As illustrated in FIG. 4A, the switching method may include the following steps.

At step 401, it is determined that the terminal is switched from a first network device to a second network device.

In some embodiments, the first network device and the second network device are network devices of different systems.

In this embodiment, the first network device is a network device in a 5G system, and the second network device is a network device in a 4G system.

In some embodiments, the first network device does not support an N26 interface.

In some embodiments, the second network device may or may not support an N26 interface.

In some embodiments, the terminal may determine that an inter-system switching from the first network device to the second network device occurs.

In some embodiments, before the switching occurs, the terminal completes initial registration with the first network device, and the first network device establishes a PDU session for user services and assigns a corresponding first address.

In the embodiment of the invention, the cause for the switching is not limited, and it can be caused by any reason, for example, it may be caused by the terminal or the network, which is not limited in the invention.

At step 402, a first message is sent to the second network device, in which the first message is used for requesting to register to the second network device, and the first message carries a first address of the terminal.

In some embodiments, a type of registration requested by the first message is handover.

In some embodiments, the first address is an address assigned to the terminal by the first network device.

Optionally, the first address is a corresponding IP address parameter assigned by the first network device when establishing connection and bearer for user services of the terminal.

Optionally, a type of the first address may be an IPv4 single stack, an IPv6 single stack, or an IPv4v6 dual stack.

In some embodiments, the first message may also include other parameters, such as a type of the requested address, an APN, etc.

In some embodiments, the parameter in the first message is obtained based on mapping of a context parameter of a PDU session established between the terminal and the first network device. For example, the above APN may be obtained based on mapping of a context parameter of the PDU session, such as DNN.

In some embodiments, the first message is an attach request.

At step 403, a second message sent by the second network device is received, in which the second message is used to indicate that the registration of the terminal is accepted, and the second message carries a second address of the terminal.

In some embodiments, the second network device sends the second message to the terminal, in which the second message is used to respond to the first message and indicates that the attach request of the terminal is accepted, and the second message carries the second address assigned to the terminal.

Optionally, the second address is different from the first address.

In some embodiments, when the terminal switches to the second network device, the second network device may not be able to assign the previous first address to the terminal, so the changed second address may be indicated to the terminal in the second message.

Optionally, the second address is a corresponding IP address parameter assigned to the terminal by the second network device.

Optionally, a type of the second address may be an IPv4 single stack, an IPv6 single stack, or an IPv4v6 dual stack.

In some embodiments, the second message is also used to activate a first bearer.

The first bearer is a default bearer corresponding to a connection established between the terminal and the second network device.

In some embodiments, the second message may carry an activate default EPS bearer context request to activate the first bearer.

In some embodiments, the activate default EPS bearer context request includes the second address.

In some embodiments, the second message also includes other parameters required by the first bearer.

In some embodiments, the second message is an attach accept.

At step 404, a fourth message is sent to the second network device, in which the fourth message is used for indicating that the terminal rejects the registration.

In some embodiments, the terminal sends the fourth message to the second network device, and the fourth message is used to indicate that the terminal rejects the registration.

Optionally, the terminal rejects the registration and triggers a detach procedure.

In some embodiments, after receiving a registration accept message that carries the changed new address sent by the second network device, the terminal can reject the registration and delete the local bearer used to initiate the attach procedure.

The terminal may re-initiate an initial attach procedure subsequently.

In detail, the terminal may send an attach request of initial type to the second network device to initiate an initial attach procedure.

As an example, the interaction between the terminal and the first network device/the second network device in the embodiments of the invention may be as shown in FIG. 4B.

Firstly, the terminal completes initial registration in the 5G network (the first network device) [in FIG. 4B, the terminal sends a registration request, and the first network device sends a registration accept], the first network device does not support the operation on an N26 interface and establishes a PDU session for user services. The network assigns a corresponding IP address parameter (IP Address 1), and a type of which may be an IPv4 single stack, an IPv6 single stack or an IPv4v6 double stack, and a DNN is assigned [in FIG. 4B, the terminal sends a PDU session establishment request, and the first network device sends a PDU session establishment accept carrying the IP Address 1].

Due to the cause of the network or the terminal, inter-system switching from the 5G to the 4G is triggered. Because the operation on the N26 interface is not supported, a PDU session of the 5G cannot be directly mapped to a PDN bearer of the 4G, and thus a new PDN connection is initiated in the 4G according to a context parameter of the PDN session in the 5G. An access stratum will notify a NAS to register after completing the inter-system switching and staying in the cell.

Further, after the attach is triggered, the NAS will take the parameter mapped from the 5G PDU session as an attach parameter, such as a type of the requested IP address, an APN, etc., and send it to the second network device in a handover type [in FIG. 4B, the terminal sends a first message (attach request of handover type)]. The second network device responds to that attach request with an attach accept carrying an activate default EPS bearer context request to activate a default bearer. The network assign s the IP address and other parameters required by the bearer [in FIG. 4B, the second network device sends a second message (attach accept), which carries an activate default EPS bearer context request containing a newly assigned IP Address 2].

Under normal circumstances, the IP address assigned to the default bearer of a 4G attach should be consistent with the IP address of the previous PDU session of the 5G, so as to realize inter-system seamless bearer switching. However, in some abnormal cases, the IP address assigned by the network for the 4G attach is inconsistent with the previous one, the network does not need to reject the attach request of the terminal, but continues to respond to the terminal with the changed IP address.

In this case, the terminal may reject the attach of handover type [the terminal sends the fourth message in FIG. 4B], and the terminal triggers a detach procedure and deletes the local bearer, and re-initiates the initial attach procedure later.

According to the switching method in embodiments of the invention, it is determined that the terminal is switched from the first network device to the second network device; the first message is sent to the second network device, in which the first message is used for requesting to register to the second network device, and the first message carries the first address of the terminal; the second message sent by the second network device is received, in which the second message is used for indicating that the registration of the terminal is accepted, and the second message carries the second address of the terminal; and the fourth message is sent to the second network device, in which the fourth message is used to indicate that the terminal rejects the registration. Therefore, when inter-system switching occurs, the terminal may realize smooth switching, so that service interruption latency may be reduced, thereby effectively improving the user experience. Moreover, signaling interaction may be reduced, the probability of abnormal occurrence and the complexity may be effectively reduced, thereby improving the stability of the terminal and the robustness of the system.

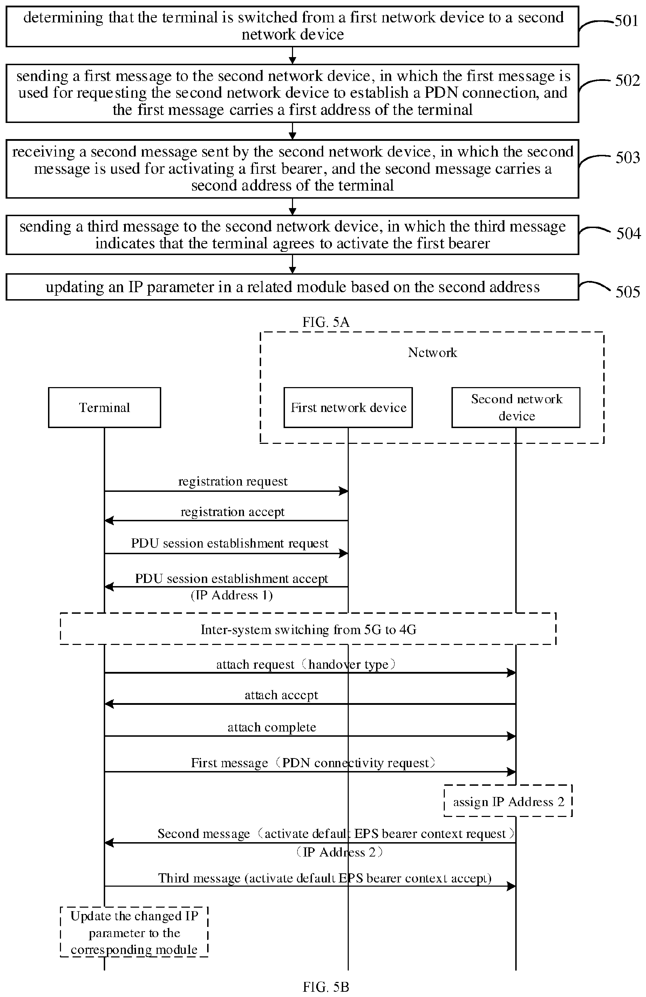

FIG. 5A is a flowchart of a switching method provided by an embodiment of the invention. It should be noted that the above method is applied to a terminal.

As illustrated in FIG. 5A, the switching method may include the following steps.

At step 501, it is determined that the terminal is switched from a first network device to a second network device.

In some embodiments, the first network device and the second network device are network devices of different systems.

In this embodiment, the first network device is a network device in a 5G system, and the second network device is a network device in a 4G system.

In some embodiments, the first network device does not support an N26 interface.

In some embodiments, the second network device may or may not support an N26 interface.

In some embodiments, the terminal may determine that an inter-system switching from the first network device to the second network device occurs.

In some embodiments, before the switching occurs, the terminal completes initial registration with the first network device, and the first network device establishes a PDU session for user services and assigns a corresponding first address.

In the embodiments of the invention, the cause for the switching is not limited, and it can be caused by any reason, for example, it may be caused by the terminal or the network, which is not limited in the invention.

At step 502, a first message is sent to the second network device, in which the first message is used to request the second network device to establish a PDN connection, and the first message carries a first address of the terminal.

In some embodiments, the first message is used to request the second network device to establish the PDN connection.

In some embodiments, the first address is an address assigned to the terminal by the first network device.

Optionally, the first address is a corresponding IP address parameter assigned by the first network device when establishing connection and bearer for user services of the terminal.

Optionally, a type of the first address may be an IPv4 single stack, an IPv6 single stack, or an IPv4v6 dual stack.

In some embodiments, the first message may also include other parameters, such as a type of the requested address, an APN, etc.

In some embodiments, the parameter in the first message is obtained based on mapping of a context parameter of a PDU session established between the terminal and the first network device. For example, the above APN may be obtained based on mapping of a context parameter of the PDU session such as DNN.

In some embodiments, the first message is a PDN connectivity request.

In some embodiments, the terminal completes an attach procedure before sending the first message, and a type of registration is handover.

At step 503, a second message sent by the second network device is received, in which the second message is used for activating a first bearer, and the second message carries a second address of the terminal.

In some embodiments, the second network device sends the second message to the terminal, in which the second message is used to respond to the first message and requests to activate the first bearer on the PDN connection, and the second message carries the second address assigned to the terminal. The first bearer is a default bearer corresponding to a connection established between the terminal and the second network device.

Optionally, the second address is different from the first address.

In some embodiments, when the terminal switches to the second network device, the second network device may not be able to assign the previous first address to the terminal, so the changed second address may be indicated to the terminal in the second message.

Optionally, the second address is a corresponding IP address parameter assigned to the terminal by the second network device.

Optionally, a type of the second address may be an IPv4 single stack, an IPv6 single stack, or an IPv4v6 dual stack.

In some embodiments, the second message may be an activate default EPS bearer context request.

In some embodiments, the activate default EPS bearer context request includes the second address.

In some embodiments, the second message also includes other parameters required by the first bearer.

At step 504, a third message is sent to the second network device, in which the third message is used for indicating that the terminal agrees to activate the first bearer.

In some embodiments, the terminal sends the third message to the second network device, and the third message is used to indicate that the terminal agrees to activate the first bearer.

In some embodiments, the third message is an activate default EPS bearer context accept.

At step 505, an IP parameter in a related module is updated based on the second address.

In some embodiments, after receiving the second message sent by the second network device, the terminal may update the IP parameter in the related module based on the updated second address carried in the second message. For example, the related module includes, but is not limited to, a wireless network AP application, a network card and other modules.

As an example, the interaction between the terminal and the first network device/the second network device in the embodiments of the disclosure may be as shown in FIG. 5B.

Firstly, the terminal completes initial registration in the 5G network (the first network device) [in FIG. 5B, the terminal sends a registration request, and the first network device sends a registration accept], the first network device does not support the operation on an N26 interface and establishes a PDU session for user services. The network assigns a corresponding IP address parameter (IP Address 1), a type of which may be an IPv4 single stack, an IPv6 single stack or an IPv4v6 double stack, and a DNN is assigned [in FIG. 5B, the terminal sends a PDU session establishment request, and the first network device sends a PDU session establishment accept carrying the IP Address 1].

Due to the cause of the network or the terminal, inter-system switching from the 5G to the 4G is triggered. Because the operation on the N26 interface is not supported, a PDU session in the 5G cannot be directly mapped to a PDN bearer of the 4G, and thus a new PDN connection is initiated in the 4G according to a context parameter of the PDN session in the 5G. An access stratum will notify a NAS to register after completing the inter-system switching and staying in the cell.

After the terminal completes the registration of handover type in the 4G [in FIG. 5B, the terminal sends an attach request of handover type, the second network device sends an attach accept, and the terminal sends an attach complete]. It is necessary to rebuild and restore the previous bearer. The NAS will take a parameter mapped from the 5G PDU session as a parameter for PDN re-establishment [in FIG. 5B, the terminal sends the first message (PDN connectivity request)], such as a type of the requested IP address, an APN, etc. The second network device responds with an activate default EPS bearer context request to activate a default bearer, and the network will assign the IP address and other parameters required by the bearer [in FIG. 5B, the second network device sends a second message (activate default EPS bearer context request), which carries a newly assigned IP Address 2].

Under normal circumstances, the IP address assigned to the default bearer in the 4G should be consistent with the IP address of the previous 5G PDU session, so as to realize inter-system seamless bearer switching. However, in some abnormal cases, the IP address assigned by the network in the 4G is inconsistent with the previous one. When this happens, in order to keep the bearer in an activated state while improving user experience without affecting user services, the network may continue to send the changed IP address to the terminal, and the terminal may not deactivate the bearer but update the changed IP parameter to the corresponding module and keep the bearer in an activated state. The module includes, but is not limited to, an AP application, a network card, etc. In this way, the new bearer may continue to be used for the corresponding service without deactivation, to maintain the continuity of service and avoid interruption.

According to the switching method in embodiments of the invention, it is determined that the terminal is switched from the first network device to the second network device; the first message is sent to the second network device, in which the first message is used to request the second network device to establish a PDN connection, and the first message carries the first address of the terminal; the second message sent by the second network device is received, in which the second message is used for activating the first bearer, and the second message carries the second address of the terminal; the third message is sent to the second network device, in which the third message is used for indicating that the terminal agrees to activate the first bearer; and the IP parameter in the related module is updated based on the second address. Therefore, when inter-system switching occurs, the terminal may realize smooth switching without service interruption, so that service continuity may be guaranteed and service interruption latency may be reduced, thereby effectively improving the user experience. Moreover, signaling interaction may be reduced, the probability of abnormal occurrence and the complexity may be effectively reduced, thereby improving the stability of the terminal and the robustness of the system.

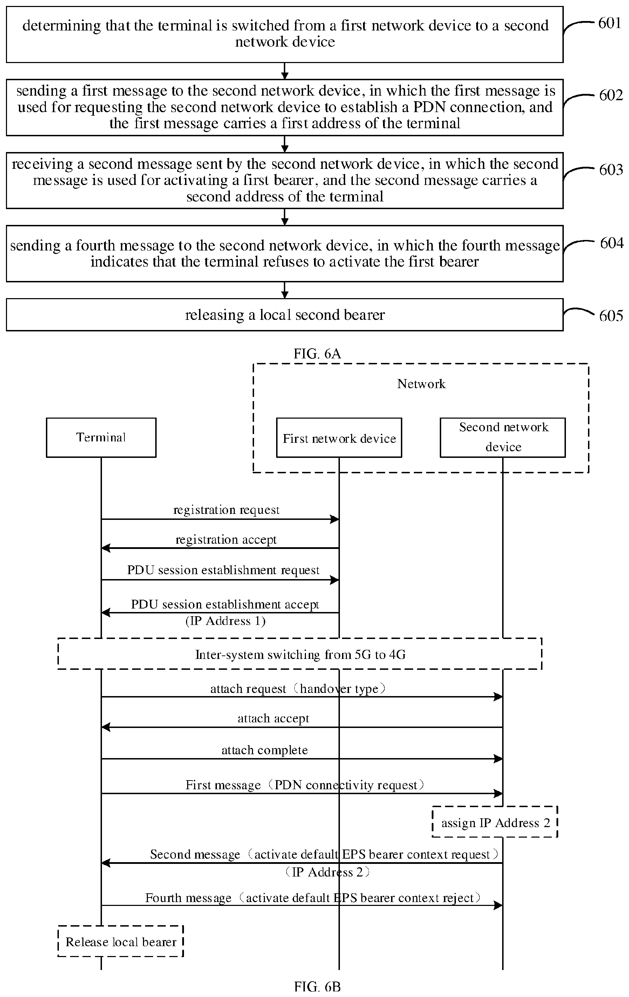

FIG. 6A is a flowchart of a switching method provided by an embodiment of the invention. It should be noted that the above method is applied to a terminal.

As illustrated in FIG. 6A, the switching method may include the following steps.

At step 601, it is determined that the terminal is switched from a first network device to a second network device.

In some embodiments, the first network device and the second network device are network devices of different systems.

In this embodiment, the first network device is a network device in a 5G system, and the second network device is a network device in a 4G system.

In some embodiments, the first network device does not support an N26 interface.

In some embodiments, the second network device may or may not support an N26 interface.

In some embodiments, the terminal may determine that an inter-system switching from the first network device to the second network device occurs.

In some embodiments, before the switching occurs, the terminal completes initial registration with the first network device, and the first network device establishes a PDU session for user services and assigns a corresponding first address.

In the embodiments of the invention, the cause for the switching is not limited, and it can be caused by any reason, for example, it may be caused by the terminal or the network, which is not limited in the invention.

At step 602, a first message is sent to the second network device, in which the first message is used to request the second network device to establish a PDN connection, and the first message carries a first address of the terminal.

In some embodiments, the first message is used to request the second network device to establish a PDN connection.

In some embodiments, the first address is an address assigned to the terminal by the first network device.

Optionally, the first address is a corresponding IP address parameter assigned by the first network device when establishing connection and bearer for user services of the terminal.

Optionally, a type of the first address may be an IPv4 single stack, an IPv6 single stack, or an IPv4v6 dual stack.

In some embodiments, the first message may also include other parameters, such as a type of the requested address, an APN, etc.

In some embodiments, the parameter in the first message is obtained based on mapping of a context parameter of a PDU session established between the terminal and the first network device. For example, the above APN may be obtained based on mapping of a context parameter of the PDU session, such as DNN.

In some embodiments, the first message is a PDN connectivity request.

In some embodiments, the terminal completes an attach procedure before sending the first message, and a type of registration is handover.

At step 603, a second message sent by the second network device is received, in which the second message is used for activating a first bearer, and the second message carries a second address of the terminal.

In some embodiments, the second network device sends the second message to the terminal. The second message is used to respond to the first message and requests to activate the first bearer on the PDN connection, and the second message carries the second address assigned to the terminal. The first bearer is a default bearer corresponding to a connection established between the terminal and the second network device.

Optionally, the second address is different from the first address.

In some embodiments, when the terminal switches to the second network device, the second network device may not be able to assign the previous first address to the terminal, so the changed second address may be indicated to the terminal in the second message.

Optionally, the second address is a corresponding IP address parameter assigned to the terminal by the second network device.

Optionally, a type of the second address may be an IPv4 single stack, an IPv6 single stack, or an IPv4v6 dual stack.

In some embodiments, the second message may be an activate default EPS bearer context request.

In some embodiments, the activate default EPS bearer context request includes the second address.

In some embodiments, the second message also includes other parameters required by the first bearer.

At step 604, a fourth message is sent to the second network device, in which the fourth message is used for indicating that the terminal refuses to activate the first bearer.

In some embodiments, the terminal may send the fourth message to the second network device, and the fourth message is used to indicate that the terminal refuses to activate the first bearer.

In some embodiments, after receiving a default bearer activation request carrying a changed new address from the second network device, the terminal may reject the request of the second network device, so as to refuse to activate the default bearer.

At step 605, a local second bearer is released.

In some embodiments, the terminal may release the local second bearer.

The second bearer is a bearer on a connection established between the terminal and the second network device, which is obtained based on mapping of a third bearer. The third bearer is a corresponding bearer on a PDU session established between the terminal and the first network device.

The terminal may notify a corresponding module, and then re-initiate activation of bearer according to service requirements.

As an example, the interaction between the terminal and the first network device/the second network device in the embodiments of the invention may be as shown in FIG. 6B.

Firstly, the terminal completes initial registration in the 5G network (the first network device) [in FIG. 6B, the terminal sends a registration request, and the first network device sends a registration accept], and the first network device does not support the operation on an N26 interface. The first network device establishes a PDU session for user services. The network assigns a corresponding IP address parameter (IP Address 1), and a type of the IP address may be an IPv4 single stack, an IPv6 single stack or an IPv4v6 double stack, and a DNN is assigned [in FIG. 6B, the terminal sends a PDU session establishment request, and the first network device sends a PDU session establishment accept carrying the IP Address 1].

Due to the cause of network or terminal, the inter-system switching from the 5G to the 4G is triggered. Because the operation on the N26 interface is not supported, a PDU session of the 5G cannot be directly mapped to a PDN bearer of the 4G, but a new PDN connection is initiated in the 4G according to a context parameter of the PDN session in the 5G. An access stratum will notify a NAS to register after completing the inter-system switching and staying in the cell.

After the terminal completes the registration of handover type in the 4G [in FIG. 6B, the terminal sends an attach request of handover type, the second network device sends an attach accept, and the terminal sends an attach complete]. It is necessary to rebuild and restore a previous bearer. The NAS will take the parameter mapped from the 5G PDU session as the parameter for PDN re-establishment [in FIG. 6B, the terminal sends the first message (PDN connectivity request)], such as a type of the requested IP address, an APN, etc. The second network device responds with an activate default EPS bearer context request to activate a default bearer, and the network will assign the IP address and other parameters required by the bearer [in FIG. 6B, the second network device sends a second message (activate default EPS bearer context request), which carries a newly assigned IP Address 2].

Under normal circumstances, the IP address assigned to the default bearer in the 4G should be consistent with the IP address of the previous PDU session of the 5G, so as to realize inter-system seamless bearer switching. However, in some abnormal cases, the IP address assigned by the network in the 4G is inconsistent with the previous one. When this happens, in order to keep the bearer in an activated state while improving user experience without affecting user services, the network may continue to send the changed IP address to the terminal. In some cases, after the terminal receives the bearer activation request for change of the IP address, it may also reject the request of the network [the terminal sends the fourth message (activate default EPS bearer context reject) in FIG. 6B], release the local bearer, notify the corresponding module, and then re-initiate bearer activation according to service requirements.

According to the switching method in embodiments of the invention, it is determined that the terminal is switched from the first network device to the second network device; the first message is sent to the second network device, in which the first message is used to request the second network device to establish a PDN connection, and the first message carries the first address of the terminal; the second message sent by the second network device is received, in which the second message is used for activating the first bearer, and the second message carries the second address of the terminal; the fourth message is sent to the second network device, in which the fourth message is used for indicating that the terminal refuses to activate the first bearer; and the local second bearer is released. Therefore, the terminal may realize smooth switching when inter-system switching occurs, and thus the service interruption delay may be reduced, and the user experience may be effectively improved. Moreover, the signaling interaction may also be reduced, the probability of abnormal occurrence and the complexity may be effectively reduced, thereby improving the stability of the terminal and the robustness of the system.

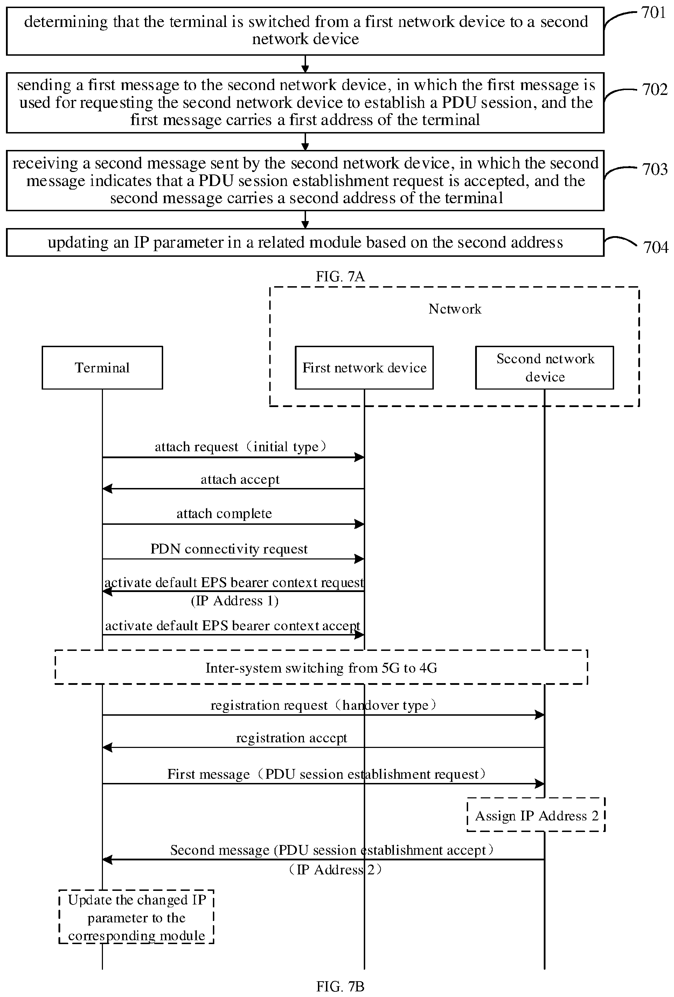

FIG. 7A is a flowchart of a switching method provided by an embodiment of the invention. It should be noted that the above method is applied to a terminal.

As illustrated in FIG. 7A, the switching method may include the following steps.

At step 701, it is determined that the terminal is switched from a first network device to a second network device.

In some embodiments, the first network device and the second network device are network devices of different systems.

In this embodiment, the first network device is a network device in a 4G system, and the second network device is a network device in a 5G system.

In some embodiments, the first network device does not support an N26 interface.

In some embodiments, the second network device may or may not support an N26 interface.

In some embodiments, the terminal may determine that an inter-system switching from the first network device to the second network device occurs.

In some embodiments, before the switching occurs, the terminal completes initial registration with the first network device, and the first network device establishes a PDN connection and a corresponding bearer for user services, and assigns a corresponding first address.

In the embodiments of the invention, the cause for the switching is not limited, and it can be caused by any reason, for example, it may be caused by the terminal or the network, which is not limited in the invention.

At step 702, a first message is sent to the second network device, in which the first message is used to request the second network device to establish a PDU session, and the first message carries a first address of the terminal.

In some embodiments, the first message is used to request the second network device to establish a PDU session.

In some embodiments, the first address is an address assigned to the terminal by the first network device.

Optionally, the first address is a corresponding IP address parameter assigned by the first network device when establishing connection and bearer for user services of the terminal.

Optionally, a type of the first address may be an IPv4 single stack, an IPv6 single stack, or an IPv4v6 dual stack.

In some embodiments, the first message may also include other parameters, such as a type of the requested address, a DNN, etc.

In some embodiments, the parameter in the first message is obtained based on mapping of a context parameter of a bearer corresponding to the PDN connection established between the terminal and the first network device. For example, the above DNN may be obtained based on mapping of the context parameter of the bearer corresponding to the PDN connection, such as an APN.

In some embodiments, the first message is a PDU session establishment request.

In some embodiments, the terminal completes a registration procedure before sending the first message, and a type of registration is handover.

At step 703, a second message sent by the second network device is received, in which the second message is used to indicate that a PDU session establishment request is accepted, and the second message carries a second address of the terminal.

In some embodiments, the second network device sends the second message to the terminal, which is used to respond to the first message and indicates that the PDU session establishment request is accepted, and the second message carries the second address assigned to the terminal.

Optionally, the second address is different from the first address.

In some embodiments, when the terminal switches to the second network device, the second network device may not be able to assign the previous first address to the terminal, so the changed second address may be indicated to the terminal in the second message.

Optionally, the second address is a corresponding IP address parameter assigned to the terminal by the second network device.

Optionally, a type of the second address may be an IPv4 single stack, an IPv6 single stack, or an IPv4v6 dual stack.

In some embodiments, the second message may be a PDU session establishment accept.

In some embodiments, the second message also includes other parameters required for reestablishment of the PDU session.

At step 704, an IP parameter in a related module is updated based on the second address.

In some embodiments, after receiving the second message sent by the second network device, the terminal may update the IP parameter in the related module based on the updated second address in the second message. For example, the related module includes, but is not limited to, a wireless network AP application, a network card and other modules.

As an example, the interaction between the terminal and the first network device/the second network device in the embodiments of the invention may be as shown in FIG. 7B.

Firstly, the terminal completes initial registration in the 4G network [in FIG. 7B, the terminal sends an attach request of initial type, the first network device sends an attach accept, and the terminal sends an attach complete], and it does not support the operation on an N26 interface. A PDN bearer is established for user services, and the network assigns a corresponding IP address parameter, and a type of the IP address may be an IPv4 single stack, an IPv6 single stack or an IPv4v6 double stack, and an APN is assigned.

Due to the cause of the network or the terminal, inter-system switching from the 5G to the 4G is triggered. Because the operation on the N26 interface is not supported, a default PDN bearer in the 4G cannot be directly mapped to a PDU session in the 5G, but a new PDU session is initiated in the 5G according to a context parameter of a bearer corresponding to a PDN connection in the 4G. An access stratum will notify a NAS to register after completing the inter-system switching and staying in the cell.

After the terminal completes the registration of handover type in the 5G [in FIG. 7B, the terminal sends a registration request, and the first network device sends a registration accept), it is necessary to rebuild and restore the previous bearer. The NAS will use a parameter mapped from the 4G PDN bearer as the parameter for PDU session reestablishment [in FIG. 7B, the terminal sends the first message (PDU session establishment request)], such as a type of the requested IP address, an APN(DNN), etc. The network responds with a PDU session establishment accept to activate the PDU session, and the network will assign the IP address and other parameters required by the bearer [in FIG. 7B, the second network device sends a second message (PDU session establishment accept), which carries a newly assigned IP Address 2].

Under normal circumstances, the IP address assigned to the PDU session in the 5G should be consistent with the IP address of the previous PDU default bearer of the 4G, so as to realize inter-system seamless bearer switching. However, in some abnormal cases, the IP address assigned by the network in the 5G is inconsistent with the previous one. When this happens, in order to keep the bearer in an activated state while improving user experience without affecting user services, the network may continue to send the changed IP address to the terminal. The terminal may not deactivate the bearer, but update the changed IP parameter to the corresponding module, which includes, but is not limited to, an AP application, a network card, etc., and continue to maintain an activated state of the bearer. In this way, the new bearer may continue to be used for the corresponding service without deactivation, which maintains the continuity of service and avoids interruption.

According to the switching method in embodiments of the invention, it is determined that the terminal is switched from the first network device to the second network device; the first message is sent to the second network device, in which the first message is used to request the second network device to establish a PDU session, and the first message carries the first address of the terminal; the second message sent by the second network device is received, in which the second message is used for indicating that the PDU session establishment request is accepted, and the second message carries the second address of the terminal; and the IP parameter in the related module is updated based on the second address. Therefore, when inter-system switching occurs, the terminal may realize smooth switching without service interruption, and thus service continuity may be guaranteed, service interruption latency may be reduced, thereby effectively improving the user experience. Moreover, signaling interaction may be reduced, the probability of abnormal occurrence and the complexity may be effectively reduced, thereby improving the stability of the terminal and the robustness of the system.

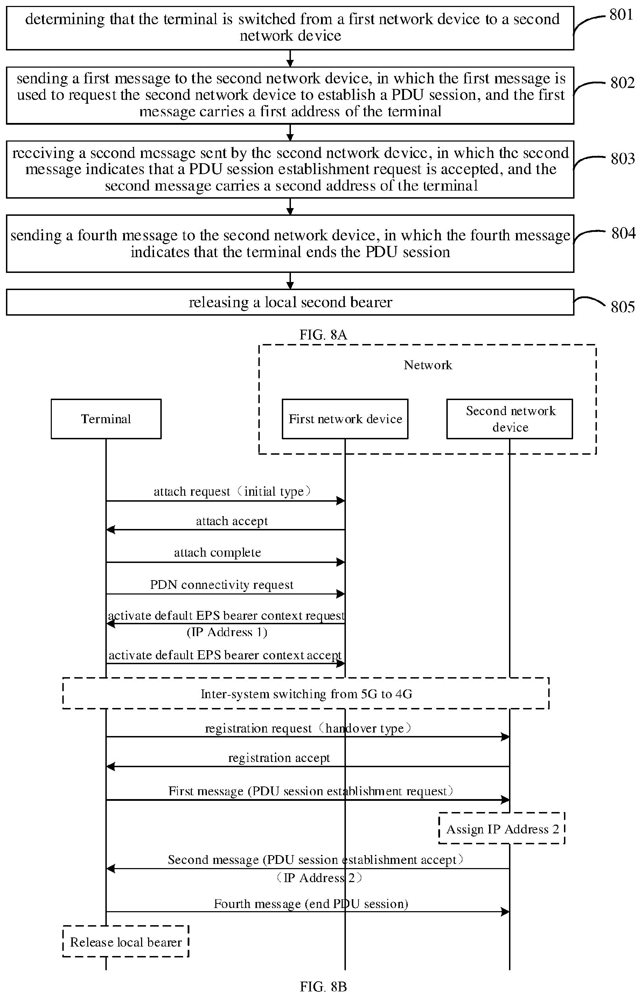

FIG. 8A is a flowchart of another switching method provided by an embodiment of the invention. It should be noted that the above method is applied to a terminal.

As illustrated in FIG. 8A, the switching method may include the following steps.

At step 801, it is determined that the terminal is switched from a first network device to a second network device.

In some embodiments, the first network device and the second network device are network devices of different systems.

In this embodiment, the first network device is a network device in a 4G system, and the second network device is a network device in a 5G system.

In some embodiments, the first network device does not support an N26 interface.

In some embodiments, the second network device may or may not support an N26 interface.

In some embodiments, the terminal may determine that an inter-system switching from the first network device to the second network device occurs.

In some embodiments, before the switching occurs, the terminal completes initial registration with the first network device, and the first network device establishes a PDN connection and a corresponding bearer for user services, and assigns a corresponding first address.

In the embodiments of the invention, the cause for the switching is not limited, and it can be caused by any reason, for example, it may be caused by the terminal or the network, which is not limited in the invention.

At step 802, a first message is sent to the second network device, in which the first message is used to request the second network device to establish a PDU session, and the first message carries a first address of the terminal.

In some embodiments, the first message is used to request the second network device to establish a PDU session.

In some embodiments, the first address is an address assigned to the terminal by the first network device.

Optionally, the first address is a corresponding IP address parameter assigned by the first network device when establishing connection and bearer for user services of the terminal.

Optionally, a type of the first address may be an IPv4 single stack, an IPv6 single stack, or an IPv4v6 dual stack.

In some embodiments, the first message may also include other parameters, such as a type of the requested address, a DNN, etc.

In some embodiments, the parameter in the first message is obtained based on mapping of a context parameter of a bearer corresponding to the PDN connection established between the terminal and the first network device. For example, the above DNN may be obtained based on mapping of the context parameter of the bearer corresponding to the PDN connection, such as an APN.

In some embodiments, the first message is a PDU session establishment request.

In some embodiments, the terminal completes a registration procedure before sending the first message, and a type of registration is handover.

At step 803, a second message sent by the second network device is received, in which the second message is used to indicate that a PDU session establishment request is accepted, and the second message carries a second address of the terminal.

In some embodiments, the second network device sends the second message to the terminal, which is used to respond to the first message and indicates that the PDU session establishment request is accepted, and the second message carries the second address assigned to the terminal.

Optionally, the second address is different from the first address.

In some embodiments, when the terminal switches to the second network device, the second network device may not be able to assign the previous first address to the terminal, so the changed second address may be indicated to the terminal in the second message.

Optionally, the second address is a corresponding IP address parameter assigned to the terminal by the second network device.

Optionally, the type of the second address may be an IPv4 single stack, an IPv6 single stack, or an IPv4v6 dual stack.

In some embodiments, the second message may be a PDU session establishment accept.

In some embodiments, the second message also includes other parameters required for reestablishment of the PDU session.

At step 804, a fourth message is sent to the second network device, in which the fourth message is used for indicating that the terminal ends the PDU session.

In some embodiments, the terminal sends the fourth message to the second network device, and the fourth message is used to indicate that the terminal ends the PDU session.

In some embodiments, after receiving a PDU session establishment accept message carrying a changed new address from the second network device, the terminal may end the PDU session, refuse to activate the PDU session, and release a local bearer.

At step 805, a local second bearer is released.

In some embodiments, the terminal releases the local second bearer.

The second bearer is a bearer on a connection established between the terminal and the second network device, which is obtained based on mapping of a third bearer. The third bearer is a corresponding bearer on a PDN connection established between the terminal and the first network device.

The terminal may notify a corresponding module to re-initiate activation of the PDU session according to service requirements.

As an example, the interaction between the terminal and the first network device/the second network device in the embodiments of the invention may be as shown in FIG. 8B.

Firstly, the terminal completes initial registration in the 4G network [in FIG. 8B, the terminal sends an attach request of initial type, the first network device sends an attach accept, and the terminal sends an attach complete], and it does not support the operation on an N26 interface. A PDN bearer is established for user services, and the network assigns a corresponding IP address parameter, and a type of IP address may be an IPv4 single stack, an IPv6 single stack or an IPv4v6 double stack, and an APN is assigned.

Due to the cause of the network or the terminal, the inter-system switching from the 4G to the 5G is triggered. Because the operation on the N26 interface is not supported, a default PDN bearer in the 4G cannot be directly mapped to a PDU session in the 5G, but a new PDU session is initiated in the 5G according to a context parameter of a bearer corresponding to a PDN connection in the 4G. An access stratum will notify a NAS to register after completing the inter-system switching and staying in the cell.

After the terminal completes the registration of handover type in the 5G [in FIG. 8B, the terminal sends a registration request, and the first network device sends a registration accept), it is necessary to rebuild and restore a previous bearer. The NAS will use the parameter mapped from the 4G PDN bearer as the parameter for PDU session reestablishment [in FIG. 8B, the terminal sends the first message (PDU session establishment request)], such as a type of the requested IP address, an APN(DNN), etc. The network responds with a PDU session establishment accept to activate the PDU session, and the network will assign the IP address and other parameters required by the bearer [in FIG. 8B, the second network device sends the second message (PDU session establishment accept), which carries a newly assigned IP Address 2].

Under normal circumstances, the IP address assigned to the PDU session in the 5G should be consistent with the IP address of the previous PDU default bearer of the 4G, so as to realize inter-system seamless bearer switching. However, in some abnormal cases, the IP address assigned by the network in the 5G is inconsistent with the previous one. When this happens, in order to keep the bearer in an activated state while improving user experience without affecting user services, the network may continue to send the changed IP address to the terminal. In some cases, the terminal may end the PDU session, release the local bearer, and notify the corresponding module, and then re-initiate the activation of the PDU session according to the service requirements.

According to the switching method in embodiments of the invention, it is determined that the terminal is switched from the first network device to the second network device; the first message is sent to the second network device, in which the first message is used to request the second network device to establish the PDU session, and the first message carries the first address of the terminal; the second message sent by the second network device is received, in which the second message is used to indicate that the PDU session establishment request is accepted, and the second message carries the second address of the terminal; and the IP parameter in the related module is updated based on the second address. Therefore, the terminal may realize smooth switching when inter-system switching occurs, the service interruption delay may be reduced, thereby effectively improving the user experience. Moreover, the signaling interaction may also be reduced, the probability of abnormal occurrence and the complexity may be effectively reduced, thereby improving the stability of the terminal and the robustness of the system.

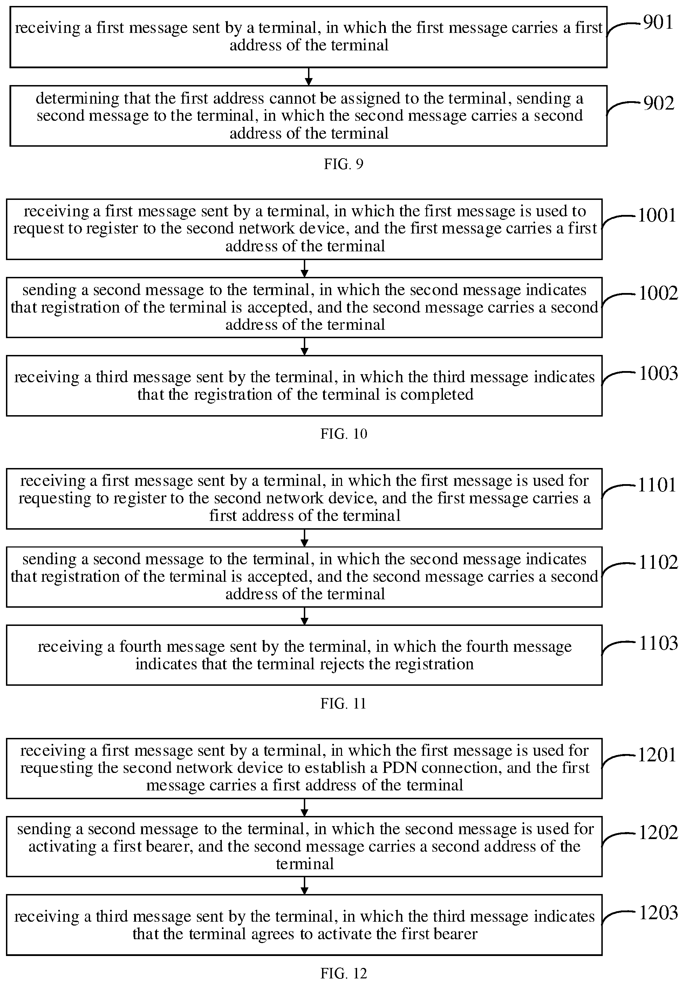

FIG. 9 is a flowchart of a switching method provided by an embodiment of the invention. It should be noted that the above method is applied to a second network device.

As illustrated in FIG. 9, the switching method may include the following steps.

At step 901, a first message sent by a terminal is received, in which the first message carries a first address of the terminal.

In this embodiment of the invention, the terminal is switched from the first network device to the second network device.

In some embodiments, the first network device and the second network device are network devices of different systems.

For example, the first network device is a network device in a 4G system, and the second network device is a network device in a 5G system. Or, the first network device is a network device in a 5G system, and the second network device is a network device in a 4G system.

In some embodiments, the first network device does not support an N26 interface.

In some embodiments, the second network device may or may not support an N26 interface.

In some embodiments, the terminal may determine that an inter-system switching from the first network device to the second network device occurs.

In some embodiments, before the switching occurs, the terminal completes initial registration with the first network device, and the first network device establishes a PDN connection or PDU session for user services and assigns a corresponding first address.

In the embodiments of the invention, the cause for the switching is not limited, and it can be caused by any reason, for example, it may be caused by the terminal or the network, which is not limited in the invention.

The first address is an address assigned to the terminal by the first network device.

Optionally, the first address is a corresponding IP address parameter assigned by the first network device when establishing connection and bearer for user services of the terminal.

Optionally, the type of the first address may be an IPv4 single stack, an IPv6 single stack, or an IPv4v6 dual stack.

In some embodiments, the first message is used to request to register to the second network device.

In some embodiments, the first message is used to request the second network device to establish a PDN connection.

In some embodiments, the first message is used to request the second network device to establish a PDU session.

In some embodiments, the first message may also include other parameters, such as an Access Point Name (APN), a Data Network Name (DNN), etc.

In some embodiments, the parameters in the first message are obtained based on context parameters of a PDN connection or PDU session previously established between the terminal and the first network device.

At step 902, it is determined that the first address cannot be assigned to the terminal, a second message is sent to the terminal, in which the second message carries a second address of the terminal.

Optionally, the second address is different from the first address.

In some embodiments, when the terminal switches to the second network device, the second network device may not be able to assign the previous first address to the terminal, so the changed second address is indicated to the terminal in the second message.

Optionally, the second address is a corresponding IP address parameter assigned to the terminal by the second network device.

Optionally, a type of the second address may be an IPv4 single stack, an IPv6 single stack, or an IPv4v6 dual stack.

In some embodiments, the second message is used to indicate that the registration of the terminal is accepted, and the second message is also used to activate a first bearer.

In some embodiments, the second message is used to activate the first bearer.

In some embodiments, the second message is used to indicate that a PDU session establishment request is accepted.

In embodiments of the invention, the first message sent by the terminal is received, in which the first message carries the first address; it is determined that the first address cannot be assigned to the terminal, the second message is sent to the terminal, in which the second message carries the second address, the second address is assigned to the terminal by the second network device, and the second address is different from the first address. Therefore, under the condition that the terminal cannot be assigned with the original address by the second network device when inter-system switching occurs, a current connection will not be disconnected immediately and a new address may be assigned while maintaining the current connection, to realize smooth switching and avoid service interruption, and thus service continuity may be guaranteed, service interruption latency may be reduced, thereby effectively improving the user experience. Moreover, signaling interaction may be reduced, the probability of abnormal occurrence and the complexity may be effectively reduced, thereby improving the stability of the terminal and the robustness of the system.

FIG. 10 is a flowchart of a switching method provided by an embodiment of the invention. It should be noted that the above method is applied to a second network device.

As illustrated in FIG. 10, the switching method may include the following steps.

At step 1001, a first message sent by a terminal is received, in which the first message is used to request to register to the second network device, and the first message carries a first address of the terminal.

In some embodiments, a type of registration requested by the first message is handover.

In some embodiments, the first address is an address assigned to the terminal by the first network device.

Optionally, the first address is a corresponding IP address parameter assigned by the first network device when establishing connection and bearer for user services of the terminal.

Optionally, a type of the first address may be an IPv4 single stack, an IPv6 single stack, or an IPv4v6 dual stack.

In some embodiments, the first message may also include other parameters, such as a type of the requested address, an APN, etc.

In some embodiments, the parameter in the first message is obtained based on mapping of a context parameter of a PDU session established between the terminal and the first network device. For example, the above APN may be obtained based on mapping of a context parameter of the PDU session, such as DNN.

In some embodiments, the first message is an attach request.

In this embodiment of the invention, the terminal is switched from the first network device to the second network device.

In some embodiments, the first network device and the second network device are network devices of different systems.

For example, the first network device is a network device in a 4G system, and the second network device is a network device in a 5G system. Or, the first network device is a network device in a 5G system, and the second network device is a network device in a 4G system.

In some embodiments, the first network device does not support an N26 interface.

In some embodiments, the second network device may or may not support an N26 interface.

In some embodiments, the terminal may determine that an inter-system switching from the first network device to the second network device occurs.

In some embodiments, before the switching occurs, the terminal completes initial registration with the first network device, and the first network device establishes a PDN connection or PDU session for user services and assigns a corresponding first address.

In the embodiment of the invention, the cause for the switching is not limited, and it can be caused by any reason, for example, it may be caused by the terminal or the network, which is not limited in the invention.

At step 1002, a second message is sent to the terminal, in which the second message is used to indicate that the registration of the terminal is accepted, and the second message carries a second address of the terminal.

In some embodiments, the second network device sends the second message to the terminal, in which the second message is used to respond to the first message and indicates that the registration request of the terminal is accepted, and the second message carries the second address assigned to the terminal.

Optionally, the second address is different from the first address.

In some embodiments, when the terminal switches to the second network device, the second network device may not be able to assign the previous first address to the terminal, so the changed second address may be indicated to the terminal in the second message.

Optionally, the second address is a corresponding IP address parameter assigned to the terminal by the second network device.

Optionally, a type of the second address may be an IPv4 single stack, an IPv6 single stack, or an IPv4v6 dual stack.

In some embodiments, the second message is also used to activate a first bearer.

The first bearer is a default bearer corresponding to a connection established between the terminal and the second network device.

In some embodiments, the second message may carry an activate default EPS bearer context request to activate the first bearer.

In some embodiments, the activate default EPS bearer context request includes the second address.

In some embodiments, the second message also includes other parameters required by the first bearer.

In some embodiments, the second message is an attach accept.

At step 1003, a third message sent by the terminal is received, in which the third message is used for indicating that the registration of the terminal is completed.

In some embodiments, the second network device may receive the third message sent by the terminal, and the third message is used to indicate that the registration of the terminal is completed.

In some embodiments, the third message is an attach complete.

Optionally, the terminal may release a local second bearer after receiving the third message.

The second bearer is a bearer on a connection established between the terminal and the second network device, which is obtained based on mapping of a third bearer. The third bearer is a bearer corresponding to a PDU session established between the terminal and the first network device.

The terminal may re-initiate establishment of a new PDN connection according to service requirements.

As an example, the interaction between the terminal and the first network device/the second network device in the embodiments of the invention may be as shown in FIG. 3B.

It should be noted that the description of FIG. 3B may refer to the description in any embodiment of the invention, and will not be repeated here.

According to the switching method of embodiments of the invention, the first message sent by the terminal is received, in which the first message is used for requesting to register to the second network device, and the first message carries the first address of the terminal; the second message is sent to the terminal, in which the second message is used for indicating that the registration of the terminal is accepted, and the second message carries the second address of the terminal; and the third message sent by the terminal is received, in which the third message is used for indicating that the registration of the terminal is completed. Therefore, under the condition that the second network device cannot assign the original address to the terminal when inter-system switching occurs, a current connection will not be disconnected immediately, a new address may be assigned while maintaining the current connection, to realize smooth switching and avoid service interruption, and thus service continuity may be guaranteed, service interruption latency may be reduced, thereby effectively improving the user experience. Moreover, signaling interaction may be reduced, the probability of abnormal occurrence and the complexity may be effectively reduced, thereby improving the stability of the terminal and the robustness of the system.

FIG. 11 is a flowchart of a switching method provided by an embodiment of the invention. It should be noted that the above method is applied to a second network device.

As illustrated in FIG. 11, the switching method may include the following steps.

At step 1101, a first message sent by a terminal is received, in which the first message is used for requesting to register to the second network device, and the first message carries a first address of the terminal.

At step 1102, a second message is sent to the terminal, in which the second message is used to indicate that the registration of the terminal is accepted, and the second message carries a second address of the terminal.

It should be noted that the specific implementations of steps 1101-1102 may refer to the embodiments of the invention, and will not be repeated here.

At step 1103, a fourth message sent by the terminal is received, in which the fourth message is used for indicating that the terminal rejects the registration.

In some embodiments, the second network device may receive the fourth message sent by the terminal, and the fourth message is used to indicate that the terminal rejects the registration.

Optionally, the terminal rejects the registration and triggers a detach procedure.

In some embodiments, after receiving a registration accept message that carries a changed new address sent by the second network device, the terminal may reject the registration and delete a local bearer used to initiate an attach procedure.

The terminal may re-initiate an initial attach procedure subsequently.

In detail, the terminal may send an attach request of initial type to the second network device to initiate the initial attach procedure.

As an example, the interaction between the terminal and the first network device/the second network device in the embodiments of the invention may be as shown in FIG. 4B.

It should be noted that the description of FIG. 4B may refer to the description in any embodiment of the invention, and will not be repeated here.

According to the switching method in embodiments of the invention, the first message sent by the terminal is received, in which the first message is used for requesting to register to the second network device, and the first message carries the first address of the terminal; the second message is sent to the terminal, in which the second message is used to indicate that the registration of the terminal is accepted, and the second message carries the second address of the terminal; and the fourth message sent by the terminal is received, in which the fourth message is used for indicating that the terminal rejects the registration. Therefore, under the condition that the second network device cannot assign the original address to the terminal when inter-system switching occurs, the connection with the network may be reestablished within a short time period, to realize smooth switching and reduce service interruption latency can be reduced, thereby effectively improving the user experience. Moreover, signaling interaction may be reduced, the probability of abnormal occurrence and the complexity may be effectively reduced, thereby improving the stability of the terminal and the robustness of the system.

FIG. 12 is a flowchart of a switching method provided by an embodiment of the invention. It should be noted that the above method is applied to a second network device.

As illustrated in FIG. 12, the switching method may include the following steps.

At step 1201, a first message sent by a terminal is received, in which the first message is used for requesting the second network device to establish a PDN connection, and the first message carries a first address of the terminal.

In some embodiments, the first message is used to request the second network device to establish the PDN connection.

In some embodiments, the first address is an address assigned to the terminal by the first network device.

Optionally, the first address is a corresponding IP address parameter assigned by the first network device when establishing connection and bearer for user services of the terminal.

Optionally, the type of the first address may be an IPv4 single stack, an IPv6 single stack, or an IPv4v6 dual stack.

In some embodiments, the first message may also include other parameters, such as a type of the requested address, an APN, etc.

In some embodiments, the parameter in the first message is obtained based on mapping of a context parameter of a PDU session established between the terminal and the first network device. For example, the above APN may be obtained based on mapping of a context parameter of the PDU session, such as DNN.

In some embodiments, the first message is a PDN connectivity request.

In some embodiments, the terminal completes an attach procedure before sending the first message, and a type of registration is handover.

In this embodiment of the invention, the terminal switches from the first network device to the second network device.

In some embodiments, the first network device and the second network device are network devices of different systems.

In this embodiment, the first network device is a network device in a 5G system, and the second network device is a network device in a 4G system.

In some embodiments, the first network device does not support an N26 interface.

In some embodiments, the second network device may or may not support an N26 interface.

In some embodiments, the terminal may determine that an inter-system switching from the first network device to the second network device occurs.

In some embodiments, before the switching occurs, the terminal completes initial registration with the first network device, and the first network device establishes a PDU session for user services and assigns a corresponding first address.

In the embodiments of the invention, the cause for the switching is not limited, and it can be caused by any reason, for example, it may be caused by the terminal or the network, which is not limited in the invention.

At step 1202, a second message is sent to the terminal, in which the second message is used for activating a first bearer, and the second message carries a second address of the terminal.

In some embodiments, the second network device sends the second message to the terminal, in which the second message is used to respond to the first message and request to activate the first bearer on the PDN connection, and the second message carries the second address assigned to the terminal. The first bearer is a default bearer corresponding to a connection established between the terminal and the second network device.

Optionally, the second address is different from the first address.

In some embodiments, when the terminal switches to the second network device, the second network device may not be able to assign the previous first address to the terminal, so the changed second address may be indicated to the terminal in the second message.

Optionally, the second address is a corresponding IP address parameter assigned to the terminal by the second network device.

Optionally, a type of the second address may be an IPv4 single stack, an IPv6 single stack, or an IPv4v6 dual stack.

In some embodiments, the second message may be an activate default EPS bearer context request.

In some embodiments, the activate default EPS bearer context request includes the second address.

In some embodiments, the second message also includes other parameters required by the first bearer.

At step 1203, a third message sent by the terminal is received, in which the third message is used to indicate that the terminal agrees to activate the first bearer.

In some embodiments, the second network device receives the third message sent by the terminal, and the third message is used to indicate that the terminal agrees to activate the first bearer.

In some embodiments, the third message is activate default EPS bearer context accept.

In some embodiments, the second address is used for the terminal to update an IP parameter in a related module.

In some embodiments, after receiving the second message sent by the second network device, the terminal may update the IP parameter in the related module based on the updated second address carried in the second message. For example, the IP parameter of the module, which includes, but is not limited to, a wireless AP application and a network card, may be updated.

As an example, the interaction between the terminal and the first network device/the second network device in the embodiments of the invention may be as shown in FIG. 5B.

It should be noted that the description of FIG. 5B can refer to the description in any embodiment of the invention, and will not be repeated here.

According to the switching method in embodiments of the invention, the first message sent by the terminal is received, in which the first message is used for requesting the second network device to establish the PDN connection, and the first message carries the first address of the terminal; the second message is sent to the terminal, in which the second message is used for activating the first bearer, and the second message carries the second address of the terminal; and the third message sent by the terminal is received, in which the third message is used for indicating that the terminal agrees to activate the first bearer. Therefore, under the condition that the second network device cannot assign the original address to the terminal when inter-system switching occurs, a current connection will not be disconnected immediately, a new address may be assigned while maintaining the current connection, to realize smooth switching and avoid service interruption, and thus service continuity may be guaranteed, service interruption latency may be reduced, thereby effectively improving the user experience. Moreover, signaling interaction may be reduced, the probability of abnormal occurrence and the complexity may be effectively reduced, thereby improving the stability of the terminal and the robustness of the system.

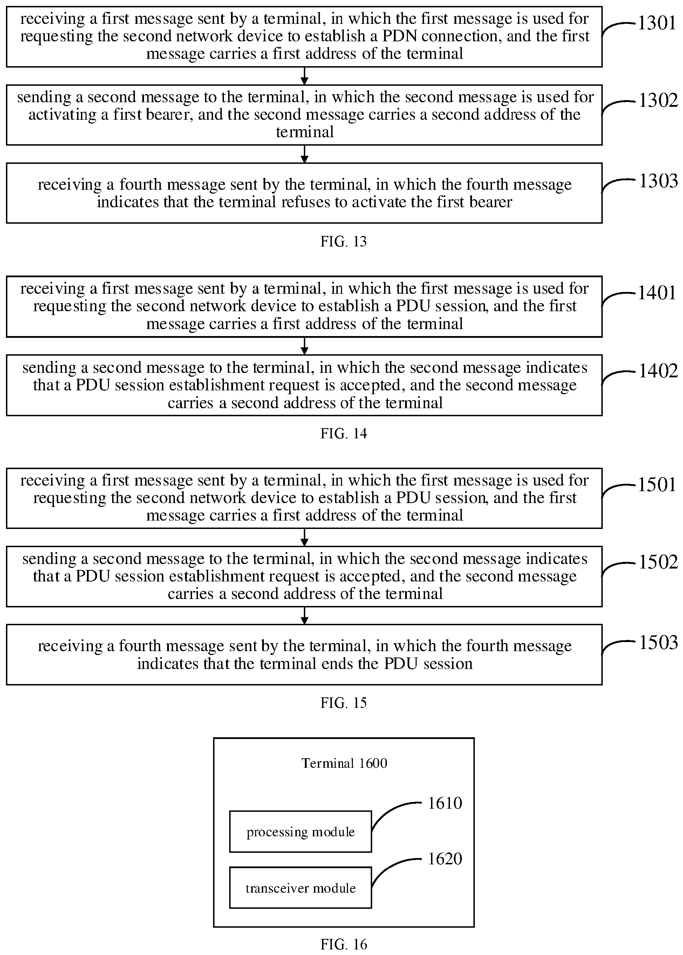

FIG. 13 is a flowchart of a switching method provided by an embodiment of the invention. It should be noted that the above method is applied to a second network device.

As illustrated in FIG. 13, the switching method may include the following steps.

At step 1301, a first message sent by a terminal is received, in which the first message is used for requesting the second network device to establish a PDN connection, and the first message carries a first address of the terminal.

At step 1302, a second message is sent to the terminal, in which the second message is used for activating a first bearer, and the second message carries a second address of the terminal.

It should be noted that the specific implementations of steps 1301-1302 may refer to the embodiments of the invention, and will not be repeated here.

At step 1303, a fourth message sent by the terminal is received, in which the fourth message is used for indicating that the terminal refuses to activate the first bearer.

In some embodiments, the second network device receives the fourth message sent by the terminal, and the fourth message is used to indicate that the terminal refuses to activate the first bearer.

In some embodiments, after receiving a default bearer activation request carrying a changed new address form the second network device, the terminal may reject the request of the second network device, so as to refuse to activate the default bearer.

In some embodiments, the terminal may further release a local second bearer after rejecting the request of the second network device.

The second bearer is a bearer on a connection established between the terminal and the second network device, which is obtained based on mapping of a third bearer. The third bearer is a corresponding bearer on a PDU session established between the terminal and the first network device.

The terminal may notify a corresponding module, and then re-initiate activation of bearer according to service requirements.

As an example, the interaction between the terminal and the first network device/the second network device in the embodiments of the invention may be as shown in FIG. 6B.

It should be noted that the description of FIG. 6B may refer to the description in any embodiment of the invention, and will not be repeated here.

According to the switching method in embodiment of the invention, the first message sent by the terminal is received, in which the first message is used for requesting the second network device to establish the PDN connection, and the first message carries the first address of the terminal; the second message is sent to the terminal, in which the second message is used for activating the first bearer, and the second message carries the second address of the terminal; and the fourth message sent by the terminal is received, in which the fourth message is used for indicating that the terminal refuses to activate the first bearer. Therefore, under the condition that the second network device cannot assign the original address to the terminal when inter-system switching occurs, a current connection will not be disconnected immediately, a new address may be assigned while maintaining the current connection, to realize smooth switching and avoid service interruption, and thus service continuity may be guaranteed, service interruption latency may be reduced, thereby effectively improving the user experience. Moreover, signaling interaction may be reduced, the probability of abnormal occurrence and the complexity may be effectively reduced, thereby improving the stability of the terminal and the robustness of the system.

FIG. 14 is a flowchart of a switching method provided by an embodiment of the invention. It should be noted that the above method is applied to a second network device.

As illustrated in FIG. 14, the switching method may include the following steps.

At step 1401, a first message sent by a terminal is received, in which the first message is used for requesting the second network device to establish a PDU session, and the first message carries a first address of the terminal.

In some embodiments, the first message is used to request the second network device to establish the PDU session.

In some embodiments, the first address is an address assigned to the terminal by the first network device.

Optionally, the first address is a corresponding IP address parameter assigned by the first network device when establishing connection and bearer for user services of the terminal.

Optionally, the type of the first address may be an IPv4 single stack, an IPv6 single stack, or an IPv4v6 dual stack.

In some embodiments, the first message may also include other parameters, such as a type of the requested address, a DNN, etc.

In some embodiments, the parameter in the first message is obtained based on mapping of a context parameter of a bearer corresponding to the PDN connection established between the terminal and the first network device. For example, the above DNN may be obtained based on mapping of the context parameter of the bearer corresponding to the PDN connection, such as an APN.

In some embodiments, the first message is a PDU session establishment request.

In some embodiments, the terminal completes a registration procedure before sending the first message, and a type of registration is handover.

In this embodiment of the invention, the terminal switches from the first network device to the second network device.

In some embodiments, the first network device and the second network device are network devices of different systems.

In this embodiment, the first network device is a network device in a 4G system, and the second network device is a network device in a 5G system.

In some embodiments, the first network device does not support an N26 interface.

In some embodiments, the second network device may or may not support an N26 interface.

In some embodiments, the terminal may determine that an inter-system switching from the first network device to the second network device occurs.

In some embodiments, before the switching occurs, the terminal completes initial registration with the first network device, and the first network device establishes the PDN connection and a corresponding bearer for user services, and assigns a corresponding first address.

In the embodiments of the invention, the cause for the switching is not limited, and it can be caused by any reason, for example, it may be caused by the terminal or the network, which is not limited in the invention.

At step 1402, a second message is sent to the terminal, in which the second message is used to indicate that a PDU session establishment request is accepted, and the second message carries a second address of the terminal.

In some embodiments, the second network device sends the second message to the terminal, which is used to respond to the first message and indicates that the PDU session establishment request is accepted, and the second message carries the second address assigned to the terminal.

Optionally, the second address is different from the first address.

In some embodiments, when the terminal switches to the second network device, the second network device may not be able to assign the previous first address to the terminal, so the changed second address may be indicated to the terminal in the second message.

Optionally, the second address is a corresponding IP address parameter assigned to the terminal by the second network device.

Optionally, the type of the second address may be an IPv4 single stack, an IPv6 single stack, or an IPv4v6 dual stack.

In some embodiments, the second message may be a PDU session establishment accept.

In some embodiments, the second message also includes other parameters required for reestablishment of the PDU session.

In some embodiments, the second address is used for the terminal to update an IP parameter in a related module.

In some embodiments, after receiving the second message sent by the second network device, the terminal may update the IP parameter in the related module based on the updated second address in the second message. For example, the related module includes, but is not limited to, a wireless network AP application, a network card and other modules.

As an example, the interaction between the terminal and the first network device/the second network device in the embodiments of the invention may be as shown in FIG. 7B.

It should be noted that the description of FIG. 7B may refer to the description in any embodiment of the invention, and will not be repeated here.

According to the switching method in embodiment of the invention, the first message sent by the terminal is received, in which the first message is used for requesting the second network device to establish the PDU session, and the first message carries the first address of the terminal; the second message is sent to the terminal, in which the second message is used for indicating that the PDU session establishment request is accepted, and the second message carries the second address of the terminal. Therefore, under the condition that the second network device cannot assign the original address to the terminal when inter-system switching occurs, a current connection will not be disconnected immediately, a new address may be assigned while maintaining the current connection, to realize smooth switching and avoid service interruption, and thus service continuity may be guaranteed, service interruption latency may be reduced, thereby effectively improving the user experience. Moreover, signaling interaction may be reduced, the probability of abnormal occurrence and the complexity may be effectively reduced, thereby improving the stability of the terminal and the robustness of the system.

FIG. 15 is a flowchart of a switching method provided by an embodiment of the invention. It should be noted that the above method is applied to a second network device.

As illustrated in FIG. 15, the switching method may include the following steps.

At step 1501, a first message sent by a terminal is received, in which the first message is used for requesting the second network device to establish a PDU session, and the first message carries a first address of the terminal.

At step 1502, a second message is sent to the terminal, in which the second message is used to indicate that a PDU session establishment request is accepted, and the second message carries a second address of the terminal.

It should be noted that the specific implementations of steps 1501-1502 may refer to the embodiments of the invention, and will not be repeated here.

At step 1503, a fourth message sent by the terminal is received, in which the fourth message is used for indicating that the terminal ends the PDU session.

In some embodiments, the terminal sends the fourth message to the second network device, and the fourth message is used to indicate that the terminal ends the PDU session.

In some embodiments, after receiving a PDU session establishment accept message carrying a changed new address from the second network device, the terminal may end the PDU session, refuse to activate the PDU session, and release a local bearer.

In some embodiments, after ending the PDU session, the terminal may further release a local second bearer.

The second bearer is a bearer on a connection established between the terminal and the second network device, which is obtained based on mapping of a third bearer. The third bearer is a corresponding bearer on a PDN connection established between the terminal and the first network device.

The terminal may notify a corresponding module to re-initiate activation of the PDU session according to service requirements.

As an example, the interaction between the terminal and the first network device/the second network device in the embodiments of the invention may be as shown in FIG. 8B.

It should be noted that the description of FIG. 8B may refer to the description in any embodiment of the invention, and will not be repeated here.

According to the switching method in the embodiment of the invention, the first message sent by the terminal is received, in which the first message is used for requesting the second network device to establish the PDU session, and the first message carries the first address of the terminal; the second message is sent to the terminal, in which the second message is used for indicating that the PDU session establishment request is accepted, and the second message carries the second address of the terminal; and the fourth message sent by the terminal is received, in which the fourth message is used for indicating that the terminal ends the PDU session. Therefore, under the condition that the second network device cannot assign the original address to the terminal when inter-system switching occurs, a current connection will not be disconnected immediately, a new address may be assigned while maintaining the current connection, to realize smooth switching and avoid service interruption, and thus service continuity may be guaranteed, service interruption latency may be reduced, thereby effectively improving the user experience. Moreover, signaling interaction may be reduced, the probability of abnormal occurrence and the complexity may be effectively reduced, thereby improving the stability of the terminal and the robustness of the system.

In order to realize the above embodiments, the invention further provides a terminal.

FIG. 16 is a block diagram of a terminal provided by an embodiment of the invention.

As illustrated in FIG. 16, the terminal includes a processing module 1610 and a transceiver module 1620.

The processing module 1610 is configured to determine that a terminal is switched from a first network device to a second network device, in which the first network device and the second network device are network devices of different systems. The transceiver module 1620 is configured to send a first message to the second network device, in which the first message carries a first address of the terminal, and the first address is assigned to the terminal by the first network device. The transceiver module 1620 is further configured to receive a second message sent by the second network device, in which the second message carries a second address of the terminal, the second address is assigned to the terminal by the second network device, and the second address is different from the first address.

Optionally, the first message is used to request to register to the second network device, the second message indicates that registration of the terminal is accepted, and the second message is further used to activate a first bearer. The first bearer is a default bearer on a connection established between the terminal and the second network device.

Optionally, the transceiver module 1620 is further configured to: send a third message to the second network device, in which the third message indicates that the registration of the terminal is completed.

Optionally, the processing module 1610 is configured to: release a local second bearer, in which the second bearer is a bearer on the connection established between the terminal and the second network device, and the second bearer is obtained based on mapping of a third bearer, and the third bearer is a bearer on a connection established between the terminal and the first network device.

Optionally, the first message is a registration request message, and the second message is a registration accept message.

Optionally, the transceiver module 1620 is further configured to: send a fourth message to the second network device, in which the fourth message indicates that the terminal rejects the registration.

Optionally, the processing module 1610 is further configured to: delete a local fourth bearer, in which the fourth bearer is used for the terminal to send the first message.

Optionally, the transceiver module 1620 is further configured to: send a registration request message to the second network device, in which the registration request message is of an initial type.

Optionally, the first message is used to request the second network device to establish a PDN connection, the second message is used to activate a first bearer, and the first bearer is a default bearer on a connection established between the terminal and the second network device.

Optionally, the transceiver module 1620 is further configured to: send a third message to the second network device, in which the third message indicates that the terminal agrees to activate the first bearer.

Optionally, the processing module 1610 is further configured to: update an IP parameter in a related module based on the second address.

Optionally, the transceiver module 1620 is further configured to: send a fourth message to the second network device, in which the fourth message is used to indicate that the terminal refuses to activate the first bearer; and release a local second bearer, in which the second bearer is a bearer on a connection established between the terminal and the second network device, and the second bearer is obtained based on mapping of a third bearer, and the third bearer is a bearer on a connection established between the terminal and the first network device.

Optionally, the first message is used to request the second network device to establish a PDU session, and the second message indicates that a PDU session establishment request is accepted.

Optionally, the processing module 1610 is further configured to: update an IP parameter in a related module based on the second address.

Optionally, the transceiver module 1620 is further configured to: send a fourth message to the second network device, in which the fourth message indicates that the terminal ends the PDU session; and release a local second bearer, in which the second bearer is a bearer on a connection established between the terminal and the second network device, the second bearer is based on mapping of a third bearer, and the third bearer is a bearer on a connection established between the terminal and the first network device.

Optionally, the first network device is a network device in a 5G mobile communication system, and the second network device is a network device in a 4G mobile communication system.

Optionally, the first network device is a network device in a 4G mobile communication system, and the second network device is a network device in a 5G mobile communication system.

According to the terminal in embodiment of the invention, it is determined that the terminal is switched from the first network device to the second network device, and the first network device and the second network device are network devices of different systems; the first message is sent to the second network device, in which the first message carries the first address of the terminal, and the first address is assigned to the terminal by the first network device; and the second message sent by the second network device is received, in which the second message carries the second address of the terminal, the second address is assigned to the terminal by the second network device, and the second address is different from the first address. Therefore, under the condition that the terminal cannot be assigned with the original address by the network device to which the terminal is switched when inter-system switching occurs, a current connection will not be disconnected immediately and a new address may be assigned while maintaining the current connection, to realize smooth switching and avoid service interruption, and thus service continuity may be guaranteed, service interruption latency may be reduced, thereby effectively improving the user experience. Moreover, signaling interaction may be reduced, the probability of abnormal occurrence and the complexity may be effectively reduced, thereby improving the stability of the terminal and the robustness of the system.

It should be noted that the above explanation corresponding to the embodiments of the switching method for the terminal is also applicable to the embodiments of the terminal, and will not be repeated here.

In order to realize the above embodiments, the invention also provides a second network device.

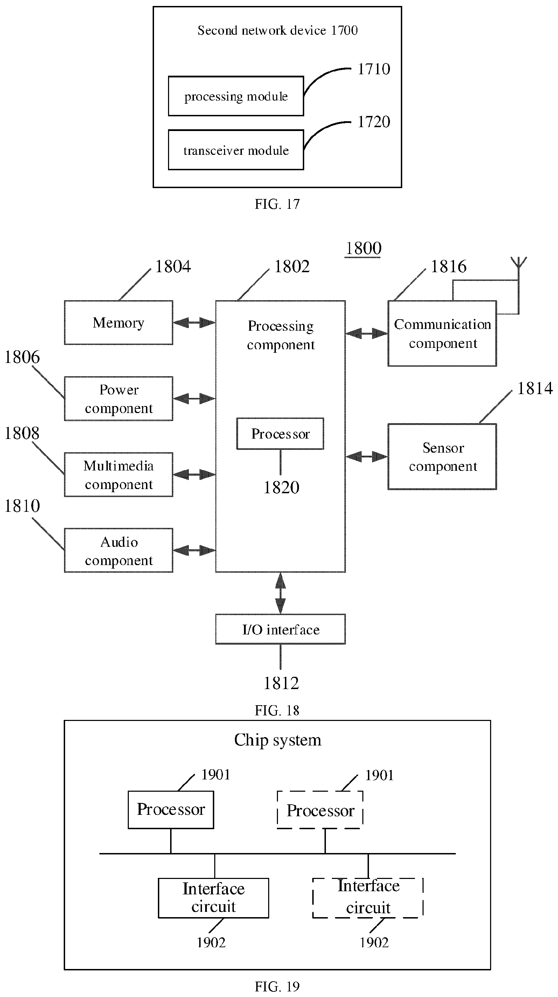

FIG. 17 is a block diagram of a terminal provided by an embodiment of the invention.

As illustrated in FIG. 17, the second network device includes: a processing module 1710 and a transceiver module 1720.

The transceiver module 1720 is configured to receive a first message sent by a terminal, in which the first message carries a first address of the terminal, and the first address is assigned to the terminal by a first network device. The transceiver module 1720 is further configured to determine that the first address cannot be assigned to the terminal, send a second message to the terminal, in which the second message carries a second address of the terminal, the second address is different from the first address, and the second address is assigned to the terminal by a second network device. The terminal is switched from the first network device to the second network device, and the first network device and the second network device are network devices of different systems.

Optionally, the first message is used to request to register to the second network device, the second message indicates that registration of the terminal is accepted, and the second message is further used to activate a first bearer, in which the first bearer is a default bearer on a connection established between the terminal and the second network device.

Optionally, the transceiver module 1720 is further configured to: receive a third message sent by the terminal, in which the third message indicates that the registration of the terminal is completed.

Optionally, the first message is a registration request message, and the second message is a registration accept message.

Optionally, the transceiver module 1720 is further configured to: receive a fourth message sent by the terminal, in which the fourth message indicates that the terminal rejects the registration.

Optionally, the transceiver module 1720 is further configured to: receive a registration request message sent by the terminal, in which the registration request message is of an initial type.

Optionally, the first message is used to request the second network device to establish a PDN connection, the second message is used to activate a first bearer, in which the first bearer is a default bearer on a connection established between the terminal and the second network device.

Optionally, the transceiver module 1720 is further configured to: receive a third message sent by the terminal, in which the third message indicates that the terminal agrees to activate the first bearer.

Optionally, the second address is further used for the terminal to update an IP parameter in a related module.

Optionally, the transceiver module 1720 is further configured to: receive a fourth message sent by the terminal, in which the fourth message further indicates that the terminal refuses to activate the first bearer.

Optionally, the first message is used to request the second network device to establish a PDU session, and the second message indicates that a PDU session establishment request is accepted.

Optionally, the second address is further used for the terminal to update an IP parameter in a related module.

Optionally, the transceiver module 1720 is further configured to: receive a fourth message sent by the terminal, in which the fourth message indicates that the terminal ends the PDU session.

Optionally, the first network device is a network device in a 5G mobile communication system, and the second network device is a network device in a 4G mobile communication system.

Optionally, the first network device is a network device in a 4G mobile communication system, and the second network device is a network device in a 5G mobile communication system.

According to the terminal in embodiments of the invention, the first message sent by the terminal is received, and the first message carries the first address; it is determined that the first address cannot be assigned to the terminal, the second message is sent to the terminal, in which the second message carries the second address of the terminal, the second address is different from the first address, and the second address is assigned to the terminal by the second network device. Therefore, under the condition that the terminal cannot be assigned with the original address by the second network device when inter-system switching occurs, a current connection will not be disconnected immediately and a new address may be assigned while maintaining the current connection, to realize smooth switching and avoid service interruption, and thus service continuity may be guaranteed, service interruption latency may be reduced, thereby effectively improving the user experience. Moreover, signaling interaction may be reduced, the probability of abnormal occurrence and the complexity may be effectively reduced, thereby improving the stability of the terminal and the robustness of the system.

It should be noted that the above explanation corresponding to the embodiments of the switching method for the second network device is also applicable to the embodiments of the terminal, and will not be repeated here.

In order to realize the above embodiments, the embodiments of the invention also provide a communication device, which includes one or more processors. The communication device is configured to execute the switching method proposed in the embodiments of FIGS. 2-8B.

In order to realize the above embodiments, the embodiments of the invention also provide a communication device, which includes one or more processors. The communication device is configured to execute the switching method proposed in the embodiments of FIGS. 9-15.

In order to realize the above embodiments, the embodiments of the invention also provide a chip, which includes a processor and an interface. The processor is configured to read instruction s to execute the switching method proposed in the embodiments of FIGS. 2-8B.

In order to realize the above embodiments, the embodiments of the invention also provide a chip, which includes a processor and an interface. The processor is configured to read instruction s to execute the switching method proposed in the embodiments of FIGS. 9-15.

In order to realize the above embodiments, the embodiments of the invention also provide another chip, which includes at least one processor and a communication interface. The communication interface is configured to receive input signals or output signals of the chip, and the processor communicates with the communication interface and implements the switching method proposed in the embodiments of FIGS. 2-8B by a logic circuit or executing a code instruction.

In order to realize the above embodiments, the embodiments of the invention also provide another chip, which includes at least one processor and a communication interface. The communication interface is configured to receive input signals or output signals of the chip, and the processor communicates with the communication interface and implements the switching method proposed in the embodiments of FIGS. 9-15 by a logic circuit or executing a code instruction.

In order to realize the above embodiments, the embodiments of the invention also provide a non-transitory computer-readable storage medium. When instructions in the storage medium are executed by a processor of a communication device, the communication device is caused to implement the switching method proposed in the above embodiments of FIGS. 2-8B.

In order to realize the above embodiments, the embodiments of the invention also provide a non-transitory computer-readable storage medium. When instructions in the storage medium are executed by a processor of a communication device, the communication device is caused to implement the switching method proposed in the above embodiments of FIGS. 9-15.

FIG. 18 is a block diagram of a communication device 1800 according to an exemplary embodiment. For example, the communication device 1800 may be a mobile phone, a computer, a digital broadcasting terminal, a message transceiver device, a game console, a tablet device, a medical device, a fitness device or a personal digital assistant.

As illustrated in FIG. 18, the communication device 1800 includes one or more of the following components: a processing component 1802, a memory 1804, a power component 1806, a multimedia component 1808, an audio component 1810, an input/output (I/O) interface 1812, a sensor component 1814, and a communication component 1816.

The processing component 1802 typically controls overall operations of the communication device 1800, such as the operations associated with display, telephone call, data communication, camera operation, and recording operation. The processing component 1802 may include one or more processors 1820 to perform instructions to implement all or part of the steps in the above described methods. Moreover, the processing component 1802 may include one or more modules which facilitate the interaction between the processing component 1802 and other components. For example, the processing component 1802 may include a multimedia module to facilitate interaction between the multimedia component 1808 and the processing component 1802.

The memory 1804 is configured to store various types of data to support the operation of the communication device 1800. Examples of such data include instructions for any applications or methods operated on the communication device 1800, contact data, phonebook data, messages, pictures, videos, etc. The memory 1804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read-Only Memory (PROM), a Read Only Memory (ROM), a magnetic memory, a flash memory, a magnetic or optical disk.

The power component 1806 provides power to various components of the communication device 1800. The power component 1806 may include a power management system, one or more power sources, and any other components associated with the generation, management, and distribution of power in the communication device 1800.

The multimedia component 1808 includes a screen providing an output interface between the communication device 1800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1808 includes a front-facing camera and/or a rear-facing camera. When the communication device 1800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1810 is configured to output and/or input audio signals. For example, the audio component 1810 includes a microphone (MIC) configured to receive an external audio signal when the communication device 1800 is in an operation mode, such as a calling mode, a recording mode, and a voice recognition mode. The received audio signal may be further stored in the memory 1804 or transmitted via the communication component 1816. In some embodiments, the audio component 1810 further includes a speaker to output audio signals.

The I/O interface 1812 provides an interface between the processing component 1802 and peripheral interface modules, such as a keyboard, a click wheel, buttons, and the like. The buttons may include, but are not limited to, a home button, a volume button, a starting button, and a locking button.

The sensor component 1814 includes one or more sensors to provide status assessments of various aspects of the communication device 1800. For instance, the sensor component 1814 may detect an open/closed status of the communication device 1800, relative positioning of components, e.g., the display and the keypad, of the communication device 1800, a change in position of the communication device 1800 or a component of the communication device 1800, a presence or absence of a user contact with the communication device 1800, an orientation or an acceleration/deceleration of the communication device 1800, and a change in temperature of the communication device 1800. The sensor component 1814 may include a proximity sensor configured to detect the presence of nearby objects without any physical contact. The sensor component 1814 may also include a light sensor, such as a Complementary Metal Oxide Semiconductor (CMOS) or Charge-Coupled Device (CCD) image sensor, for use in imaging applications. In some embodiments, the sensor component 1814 may also include an accelerometer sensor, a gyroscope sensor, a magnetic sensor, a pressure sensor, or a temperature sensor.

The communication component 1816 is configured to facilitate communication, wired or wirelessly, between the communication device 1800 and other devices. The communication device 1800 can access a wireless network based on a communication standard, such as Wi-Fi, 4G, or 18G, or a combination thereof. In an exemplary embodiment, the communication component 1816 receives a broadcast signal from an external broadcast management system or broadcast associated information via a broadcast channel. In an exemplary embodiment, the communication component 1816 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In an exemplary embodiment, the communication device 1800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

In an exemplary embodiment, there is also provided a non-transitory computer readable storage medium including instructions, such as the memory 1804, executable by the processor 1820 in the communication device 1800, for implementing the above methods. For example, the non-transitory computer-readable storage medium may be a ROM, a Random Access Memory (RAM), a CD-ROM, a magnetic tape, a floppy disc, and an optical data storage device.

Some embodiments of the invention also provide a chip system. As illustrated in FIG. 19, the chip system includes at least one processor 1901 and at least one interface circuit 1902. The processor 1901 and the interface circuit 1902 may be interconnected by wires. The interface circuit 1902 may be used to receive signals from other devices (such as a memory of an electronic device) or send signals to other devices (such as the processor 1901). For example, the interface circuit 1902 may read instructions stored in a memory and send the instructions to the processor 1901. When the instructions are executed by the processor 1901, an information processing apparatus is caused to perform the steps in the above-described embodiments. Certainly, the chip system may also include other discrete devices, which is not limited in the embodiments of the invention.

In some embodiments of the invention, the interface circuit 1902 obtains data, program instructions and/or information from the internal storage area of the chip system, or obtain data, program instructions and/or information from outside the chip system.

Optionally, the chip system further includes a memory 1903 for storing necessary computer programs and data.

It is understandable by those skilled in the art that various illustrative logical blocks and steps listed in the embodiments of the invention may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the invention.

In the description of this specification, descriptions referring to the terms "an embodiment", "some embodiments", "an example", "a specific example" or "some examples" mean that specific features, structures, materials or characteristics described in combination with this embodiment or example are included in at least one embodiment or example of this invention. In this specification, the schematic expressions of the above terms are not necessarily aimed at the same embodiment or example. Moreover, the specific features, structures, materials or characteristics described may be combined in any one or more embodiments or examples in a suitable manner. In addition, those skilled in the art can combine different embodiments or examples and features of different embodiments or examples described in this specification without contradiction.

In addition, the terms "first" and "second" are only used for the purpose of description, and cannot be understood as indicating or implying relative importance or implicitly indicating the number of indicated technical features. Therefore, the feature defined using "first" and "second" can explicitly or implicitly include at least one of the feature. In the description of this specification, "a plurality of" means at least two, such as two, three, etc., unless otherwise specifically defined.

Any description of process or method in the flowchart or otherwise described herein can be understood as representing a module, segment or part of code that includes one or more executable instructions for implementing customized logic functions or steps of the process, and the scope of preferred embodiments of the invention includes other implementations, in which functions can be performed in orders other than the order shown or discussed, including in a substantially simultaneous manner or in the reverse order according to the functions involved, which should be understood by those skilled in the technical field to which embodiments of the invention belong.

The logic and/or steps represented in a flowchart or otherwise described herein, for example, may be considered a sequential list of executable instructions for implementing a logical function that may be specifically implemented in any computer-readable medium for use by an instruction execution system, device or apparatus (e.g., a computer-based system, a system including a processor, or other systems that can obtain instructions from an instruction execution system, device, or apparatus and execute the instructions), or use by an instruction execution system, device or apparatus in combination with these instructions. In this invention, "computer readable medium" may be any device that can contain, store, communicate, propagate, or transmit programs for use in or in combination with an instruction execution system, device, or apparatus. More specific examples of the computer-readable medium (a non-exhaustive list) include the followings: an electrical connector (electronic device) having one or more wires, a portable computer disk case (magnetic device), a RAM, a Read-Only Memory (ROM), an Erasable Editable Read-Only Memory (EPROM or flash memory), a fiber optic device, and a portable Compact Disc ROM (CDROM). In addition, the computer readable medium may even be paper or other suitable medium on which the programs are printed, the programs can be obtained by electronic means through optical scanning the paper or other mediums, and by editing, decoding or, if necessary, processing in other suitable ways, and then storing it in the computer memory.

It should be understood that the various portions of the invention may be implemented with hardware, software, firmware, or a combination thereof. In the above embodiments, multiple steps or methods may be implemented by software or firmware stored in the memory and executed by a suitable instruction execution system. For example, if implemented in hardware, as in another implementation, any of the following techniques or combinations thereof are known in the art: a discrete logic circuit having logic gate circuits for implementing logic functions on data signals, an Application-Specific Integrated Circuit (ASIC) having suitable combinations of logic gate circuits, a Programmable Gate Array (PGA), and a Field Programmable Gate Array (FPGA).

Those skilled in the art can understand that all or some of the steps carried out to implement the method of the above embodiments can be accomplished by instructing the relevant hardware by means of programs. The programs can be stored in a computer readable storage medium which, when executed, includes one of the steps of the method embodiments or a combination thereof.

In addition, each functional unit in various embodiments of the invention may be integrated in a processing module, or each unit may be physically arranged separately, or two or more units may be integrated in a single module. The integrated module can be implemented either in the form of hardware or in the form of a software functional module. The integrated module may also be stored in a computer readable storage medium if it is implemented in the form of software function module and sold or used as an independent product.

The above mentioned storage medium may be a ROM, a disk or an optical disk. Although the embodiments of the invention have been shown and described above, it is understood that the above embodiments are exemplary and are not to be construed as limiting the invention. The variations, modifications, replacements and variants of the above embodiments may be made by those skilled in the art within the scope of the invention.

## Claims

1. A switching method, comprising:
determining (201, 301, 401, 501, 601, 701, 801) that a terminal is switched from a first network device to a second network device, wherein the first network device and the second network device are network devices of different systems;
sending (202) a first message to the second network device, wherein the first message carries a first address of the terminal, and the first address is assigned to the terminal by the first network device; and
receiving (203) a second message sent by the second network device, wherein the second message carries a second address of the terminal, the second address is assigned to the terminal by the second network device, and the second address is different from the first address.

2. The method of claim 1, wherein
the first message is used to request to register to the second network device;
the second message indicates that registration of the terminal is accepted, and the second message is further used to activate a first bearer;
wherein the first bearer is a default bearer on a connection established between the terminal and the second network device.

3. The method of claim 2, wherein
the method further comprises:
sending (304) a third message to the second network device, wherein the third message indicates that the registration of the terminal is completed;
optionally, the method further comprising:
releasing (305) a local second bearer;
wherein the second bearer is a bearer on the connection established between the terminal and the second network device, and the second bearer is obtained based on mapping of a third bearer, and the third bearer is a bearer on a connection established between the terminal and the first network device;
or
the method further comprises:
sending (404) a fourth message to the second network device, wherein the fourth message indicates that the terminal rejects the registration;
optionally, the method further comprising:
deleting a local fourth bearer;
wherein the fourth bearer is used for the terminal to send the first message;
optionally, the method further comprising:
sending a registration request message to the second network device, wherein the registration request message is of an initial type.

4. The method of claim 1, wherein
the first message is used to request the second network device to establish a packet data network, PDN, connection;
the second message is used to activate a first bearer; and
the first bearer is a default bearer on a connection established between the terminal and the second network device.

5. The method of claim 4, wherein
the method further comprises:
sending (504) a third message to the second network device, wherein the third message indicates that the terminal agrees to activate the first bearer;
optionally, the method further comprising:
updating (505) an internet protocol, IP, parameter in a related module based on the second address;
or
the method further comprises:
sending (604) a fourth message to the second network device, wherein the fourth message indicates that the terminal refuses to activate the first bearer; and
releasing (605) a local second bearer;
wherein the second bearer is a bearer on a connection established between the terminal and the second network device, and the second bearer is obtained based on mapping of a third bearer, and the third bearer is a bearer on a connection established between the terminal and the first network device.

6. The method of claim 1, wherein
the first message is used to request the second network device to establish a packet data unit, PDU, session; and
the second message indicates that a PDU session establishment request is accepted;
optionally, the method further comprising:
updating (704) an IP parameter in a related module based on the second address;
optionally, the method further comprising:
sending (804) a fourth message to the second network device, wherein the fourth message indicates that the terminal ends the PDU session; and
releasing (805) a local second bearer;
wherein the second bearer is a bearer on a connection established between the terminal and the second network device, the second bearer is obtained based on mapping of a third bearer, and the third bearer is a bearer on a connection established between the terminal and the first network device;
optionally, wherein the first network device is a network device in a fourth generation mobile communication system, and the second network device is a network device in a fifth generation mobile communication system.

7. A switching method, comprising:
receiving (901) a first message sent by a terminal, wherein the first message carries a first address of the terminal, and the first address is assigned to the terminal by a first network device;
determining (902) that the first address cannot be assigned to the terminal, sending a second message to the terminal, wherein the second message carries a second address of the terminal, the second address is different from the first address, and the second address is assigned to the terminal by a second network device;
wherein the terminal is switched from the first network device to the second network device, and the first network device and the second network device are network devices of different systems.

8. The method of claim 7, wherein
the first message is used to request to register to the second network device;
the second message indicates that registration of the terminal is accepted, and the second message is further used to activate a first bearer;
wherein the first bearer is a default bearer on a connection established between the terminal and the second network device.

9. The method of claim 8, wherein
the method further comprises:
receiving (1003) a third message sent by the terminal, wherein the third message indicates that the registration of the terminal is completed; optionally, wherein the first message is a registration request message, and the second message is a registration accept message;
or
the method further comprises:
receiving (1103) a fourth message sent by the terminal, wherein the fourth message indicates that the terminal rejects the registration;
optionally, the method further comprising:
receiving a registration request message sent by the terminal, wherein the registration request message is of an initial type.

10. The method of claim 7, wherein
the first message is used to request the second network device to establish a packet data network, PDN, connection;
the second message is used to activate a first bearer;
wherein the first bearer is a default bearer on a connection established between the terminal and the second network device.

11. The method of claim 10, wherein
the method further comprises:
receiving (1203) a third message sent by the terminal, wherein the third message indicates that the terminal agrees to activate the first bearer; optionally, wherein the second address is further used for the terminal to update an internet protocol, IP, parameter in a related module;
or
the method further comprises:
receiving (1303) a fourth message sent by the terminal, wherein the fourth message indicates that the terminal refuses to activate the first bearer.

12. The method of claim 7, wherein
the first message is used to request the second network device to establish a packet data unit, PDU, session;
the second message indicates that a PDU session establishment request is accepted;
optionally, wherein the second address is further used for the terminal to update an IP parameter in a related module;
optionally, the method further comprising:
receiving (1503) a fourth message sent by the terminal, wherein the fourth message indicates that the terminal ends the PDU session.

13. A terminal (1600), comprising:
a processing module (1610), configured to determine that a terminal is switched from a first network device to a second network device, wherein the first network device and the second network device are network devices of different systems;
a transceiver module (1620), configured to send a first message to the second network device, wherein the first message carries a first address of the terminal, and the first address is assigned to the terminal by the first network device; and to receive a second message sent by the second network device, wherein the second message carries a second address of the terminal, the second address is assigned to the terminal by the second network device, and the second address is different from the first address.

14. A second network device (1700), comprising:
a transceiver module (1720), configured to receive a first message sent by a terminal, wherein the first message carries a first address of the terminal, and the first address is assigned to the terminal by a first network device, determine that the first address cannot be assigned to the terminal, and send a second message to the terminal, wherein the second message carries a second address of the terminal, the second address is different from the first address, and the second address is assigned to the terminal by a second network device;
wherein the terminal is switched from the first network device to the second network device, and the first network device and the second network device are network devices of different systems.

15. A chip comprising at least one processor and a communication interface, wherein the communication interface is configured to receive input signals or output signals of a chip, and the processor communicates with the communication interface and realizes the method according to any one of claims 1-6 or the method according to any one of claims 7-12 by a logic circuit or executing code instructions.
